# EUROPEAN PATENT APPLICATION

(11) **EP 4 733 435 A1**
(43) Date of publication of application: **29.04.2026**
(21) Application number: 24825953.3
(22) Date of filing: 19.06.2024
(51) Int. Cl.: C23C 28/00, B32B 15/08, B32B 15/18, C22C 18/04, C22C 21/00, C22C 21/06, C22C 21/10, C22C 23/02, C23C 2/06, C23C 2/12

(54) **COATED PLATED STEEL SHEET**

(30) Priority: 21.06.2023 JP 2023102000
(71) Applicant: Nippon Steel Corporation, Tokyo 100-8071 (JP); Nippon Steel Coated Sheet Corporation, Tokyo 103-0023 (JP)
(72) Inventor: SHIMIZU, Makoto, Tokyo 100-8071 (JP); SHIBAO, Fumio, Tokyo 100-8071 (JP); FUJIMOTO, Yasunori, Tokyo 103-0023 (JP); KOSUGE, Tetsushi, Tokyo 103-0023 (JP); WAKASUGI, Masaya, Tokyo 103-0023 (JP); SUGITANI, Tomokazu, Tokyo 103-0023 (JP); FUKUDOME, Kotaro, Tokyo 103-0023 (JP)
(74) Representative: Vossius & Partner Patentanwälte Rechtsanwälte mbB
(86) International application number: PCT/JP2024/022282
(87) International publication number: WO 2024/262552

(57) **Abstract**

A coated plated steel sheet includes a steel sheet, a plated layer, and a protective layer. The plated layer contains aluminum, zinc, and magnesium. An average value of a ratio of an atomic concentration of the aluminum with respect to a total of an atomic concentration of the magnesium and an atomic concentration of the zinc in an outermost layer at a depth of 5 nm in the plated layer is from 0.40 to 1.50. A ratio of a mass of the resin (A1) in the protective layer with respect to a total mass of the protective layer is 0.6 or more. A ratio of a mass of a silicon atom in terms of SiO₂ in the protective layer with respect to the total mass of the protective layer is from 0.07 to 0.19. A ratio of a mass of a phosphorus atom in the protective layer with respect to the total mass of the protective layer is from 0.011 to 0.075. A ratio of a mass of a cobalt atom in the protective layer with respect to the total mass of the protective layer is from 0.0015 to 0.02.

## Description

### Technical Field

The present disclosure relates to a coated plated steel sheet in which a protective layer is formed on a plated steel sheet having a plated layer containing aluminum, zinc, and magnesium.

### Background Art

Patent Literature 1 describes a chromium-free surface-treated plated steel sheet in which a protective film with a treatment composition containing a specified aqueous titanium-containing solution, a nickel compound or/and a cobalt compound, a fluorine-containing compound, and an aqueous organic resin at predetermined proportions is formed on a surface of a fused Zn-Al-based alloy plated steel sheet having a fused Zn-Al alloy plated layer containing Al: from 1.0 to 10%, Mg: from 0.2 to 1.0%, and Ni: from 0.005 to 0.1%. Patent Literature 1 states that this chromium-free surface-treated plated steel sheet is excellent in corrosion resistance, blackening resistance, painting adhesiveness, and plating appearance.

### Citation List

### Patent Literature

Patent Literature 1: Japanese Patent Application Laid-Open (JP-A) No. 2009-132952

### SUMMARY OF INVENTION

### Technical Problem

An object of the disclosure is to ensure blackening resistance of a coated plated steel sheet including a plated layer containing aluminum, zinc, and magnesium, and a protective layer. Solution to Problem

A coated plated steel sheet according to one aspect of the disclosure includes a steel sheet, a plated layer, and a protective layer stacked in the listed order. The plated layer contains aluminum, zinc, and magnesium. An average value of an atomic concentration of the aluminum with respect to a total of an atomic concentration of the magnesium and an atomic concentration of the zinc in an outermost layer at a depth of 5 nm in the plated layer is from 0.40 to 1.50. The protective layer contains a resin (A1), a silicon compound (B1), a phosphorus compound (C1), and a cobalt compound (D1). A ratio of a mass of the resin (A1) in the protective layer with respect to a total mass of the protective layer is 0.60 or more. A ratio of a mass of a silicon atom in terms of SiO₂ in the protective layer with respect to the total mass of the protective layer is from 0.07 to 0.19. A ratio of a mass of a phosphorus atom in the protective layer with respect to the total mass of the protective layer is from 0.011 to 0.075. A ratio of a mass of a cobalt atom in the protective layer with respect to the total mass of the protective layer is from 0.0015 to 0.0200.

### Advantageous Effect of Invention

According to one aspect of the disclosure, it is possible to provide a coated plated steel sheet including a plated layer containing aluminum, zinc, and magnesium, and a protective layer, in which blackening resistance can be ensured.

### BRIEF DESCRIPTION OF DRAWINGS

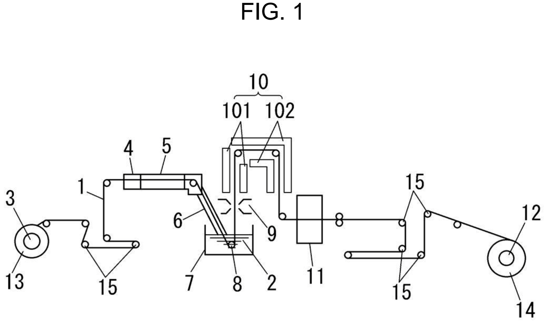

FIG. 1 is a schematic view illustrating one example of a plating treatment apparatus according to one embodiment of the disclosure.

### DESCRIPTION OF EMBODIMENTS

Conventionally, production of a plated steel sheet by application of plating to a steel sheet has been performed for the purpose of, for example, enhancing the long-term corrosion resistance of the steel sheet. Examples of a representative composition of a plated layer in a plated steel sheet include an alloy containing from 1 to 75% by mass of aluminum and the balance that mostly accounts for zinc and further contains a trace of any third component such as Si, Mg, or Ce-La.

It has recently been known that, in a case in which a plated steel sheet as described above is applied to a building member, the surface of the plated layer is easily colored black (blackened) over time due to the influence of acid rain.

Technologies relating to surface treatment for suppression of blackening of plated steel sheets have been conventionally proposed. In particular, a technology in which no hexavalent chromium is used for a surface treatment reagent (chromium-free technology) has been developed.

For example, Patent Literature 1 (JP-A No. 2009-132952) exemplifies a chromium-free surface-treated plated steel sheet in which a protective film with a treatment composition containing a specified aqueous titanium-containing solution, a nickel compound or/and a cobalt compound, a fluorine-containing compound, and an aqueous organic resin at predetermined proportions is formed on a surface of a fused Zn-Al-based alloy plated steel sheet having a fused Zn-Al alloy plated layer containing Al: from 1.0 to 10%, Mg: from 0.2 to 1.0%, and Ni: from 0.005 to 0.1%. The Literature states that corrosion resistance, blackening resistance, painting adhesiveness, and plating appearance are excellent.

However, according to investigations by the inventor, such a coated plated steel sheet is required to have blackening resistance under various environments. In particular, in a case in which the plated layer contains aluminum, zinc, and magnesium, not only blackening resistance evaluated by a promotion test, but also blackening resistance under mild conditions (under a normal environment) in which, for example, a coated plated steel sheet is actually stored is required.

The disclosure then provides a coated plated steel sheet including a steel sheet, a plated layer containing aluminum, zinc, and magnesium, and a protective layer, in which blackening resistance can be ensured under various environments.

Hereinafter, embodiments of the disclosure are described. The following embodiments are merely some of various embodiments of the disclosure. The following embodiments can also be variously modified depending on the design or the like as long as the objects of the disclosure are accomplished.

A coated plated steel sheet according to an embodiment includes a steel sheet, a plated layer, and a protective layer stacked in the listed order. The average value of the ratio of the atomic concentration of aluminum with respect to the total of the atomic concentration of magnesium and the atomic concentration of zinc in an outermost layer at a depth of 5 nm in the plated layer is from 0.40 to 1.50.

The outermost layer at a depth of 5 nm in the plated layer here means a region to a depth of 5 nm from the interface with the protective layer in the plated layer.

The protective layer contains a resin (A1), a silicon compound (B1), a phosphorus compound (C1), and a cobalt compound (D1). The ratio of the mass of the resin (A1) in the protective layer with respect to the total mass of the protective layer is 0.60 or more. The ratio of the mass of a silicon atom in terms of SiO₂ in the protective layer with respect to the total mass of the protective layer is from 0.07 to 0.19. The ratio of the mass of a phosphorus atom in the protective layer with respect to the total mass of the protective layer is from 0.011 to 0.075. The ratio of the mass of a cobalt atom in the protective layer with respect to the total mass of the protective layer is from 0.0015 to 0.020.

Therefore, an embodiment can provide a coated plated steel sheet including a plated layer containing aluminum, zinc, and magnesium, and a protective layer, in which blackening resistance can be ensured under various environments.

The "under various environments" here means "under environments in which the coated plated steel sheet is actually stored outside" including from "under a normal environment" to "under high-temperature and high-humidity environments". A coated plated steel sheet according to an embodiment can ensure blackening resistance under such various environments.

The protective layer may be directly overlapped on the plated layer, or a functional layer may be interposed between the protective layer and the plated layer. The functional layer is a layer for surface modification, and is, for example, a chemical conversion treatment layer. The functional layer may or may not overlap the protective layer. In the embodiment, the effects of the embodiment are realized even in a case in which the functional layer is not interposed between the protective layer and the plated layer, and a case in which the functional layer is not overlapped on the protective layer.

The coated plated steel sheet may have a coating film layer on the protective layer.

The coated plated steel sheet is described in more detail.

### [Steel Sheet]

The steel sheet may be, for example, a thin steel sheet or a thick steel sheet. The steel sheet is formed from iron steel such as carbon steel, alloy steel, stainless steel, nickel chromium steel, nickel chromium molybdenum steel, chromium steel, chromium molybdenum steel, or manganese steel.

### [Plated Layer]

The plated layer is described.

As described above, the plated layer contains aluminum, zinc, and magnesium. In other words, the plated layer can contain an alloy of aluminum, zinc, and magnesium. In particular, in a case in which the plated layer is produced by hot-dip plating treatment, the plated layer can contain a fused Zn-Al-Mg-based alloy. In other words, an alloy layer formed by alloying the steel sheet and a component of a plating bath during plating treatment may be interposed between the steel sheet and the plated layer. In an embodiment, the alloy layer is a separate layer from the plated layer.

The thickness of the plated layer may be, for example, from 5 µm to 40 µm.

In an embodiment, the atomic concentration composition of metals in an outermost layer at a specified depth in the plated layer is adjusted within a specified range, whereby not only adhesiveness and corrosion resistance of the plated layer are ensured, but also blackening resistance of the plated layer under a normal environment can be enhanced. Specifically, the average value of the ratio of the atomic concentration of the aluminum with respect to the total of the atomic concentration of the magnesium and the atomic concentration of the zinc in the outermost layer at a depth of 5 nm in the plated layer is from 0.40 to 1.50, whereby not only adhesiveness and corrosion resistance of the plated layer are ensured, but also blackening resistance of the plated layer under a normal environment can be enhanced.

This is descried in more detail, and, in an embodiment, the average value of the ratio of the atomic concentration of the aluminum with respect to the total of the atomic concentration of the magnesium and the atomic concentration of the zinc in the outermost layer at a depth of 5 nm in the plated layer is adjusted to 0.40 or more. In this case, the atomic concentration of the magnesium and the atomic concentration of the zinc in the outermost layer at a depth of 5 nm in the plated layer are not excessively higher, and therefore blackening resistance of the plated layer under a normal environment can be enhanced. The average value of the ratio of the atomic concentration of the aluminum with respect to the total of the atomic concentration of the magnesium and the atomic concentration of the zinc in the outermost layer at a depth of 5 nm in the plated layer is adjusted to 1.50 or less. In this case, the atomic concentration of the aluminum is not excessively higher, and therefore the reactivity of the plated layer and a phosphorus compound (C2) contained in an aqueous surface treatment agent described below can be enhanced. Therefore, the binding between the plated layer and the phosphorus compound (C1) contained in the protective layer is stronger. Thus, corrosion resistance and coating film adhesiveness of the plated layer can be ensured. The average value of this ratio is preferably 0.45 or more, more preferably 0.5 or more, still more preferably 0.6 or more. The average value of this ratio is preferably 1.40 or less, more preferably 1.20 or less, still more preferably 1.00 or less.

It has been revealed from the results of research and development that the average value of each of the atomic concentrations of the metals in the outermost layer at a depth of 5 nm in the plated layer can be adjusted by appropriately changing the plated layer. In other words, the inventor has also focused on the atomic concentration of each of the metals in the outermost layer of the plated layer and the composition or the like of the metals in the plated layer, and has found that the numerical value ranges of these are appropriately adjusted, whereby the average value of the ratio can be adjusted in a specified numerical value range, from 0.4 to 1.5.

Specifically, it has been turned out that the average value of the atomic concentration of each of the aluminum, the zinc, and the magnesium in the outermost layer at a depth of 5 nm in the plated layer can be adjusted in a specified numerical value range, whereby the average value of the ratio is appropriately adjusted in a specified numerical value range, from 0.40 to 1.50. The influence of the average value of the atomic concentration of each of the aluminum, the zinc, and the magnesium in the outermost layer at a depth of 5 nm in the plated layer, in which the value is adjusted in a specified numerical value range, on the average value of the ratio is described in detail in "Atomic Composition of Each Metal in Outermost Layer of Plated Layer".

It has also been additionally turned out that the proportion of each of the metals, for example, the aluminum, the zinc, and the magnesium in the plated layer is adjusted in a specified numerical value range, whereby the average value of the ratio can be adjusted in a specified numerical value range, from 0.40 to 1.50. The influence of the proportion of the aluminum with respect to the total of the zinc and the magnesium in the plated layer, and the proportion of each of the aluminum, the zinc, and the magnesium, in which these proportions are adjusted in specified numerical value ranges, on the average value of the ratio is described in detail in "Composition of Entire Plated Layer".

Further, the inventor has also found that plating treatment is applied to the steel sheet, and thus the method and conditions during production of the plated layer are appropriately changed, whereby the average value of the ratio tends to be adjusted in a specified numerical value range. Specifically, it has been turned out that, in a case in which the method of producing the plated layer with hot-dip plating treatment is adopted as the method of producing the plated layer, the average value of the ratio tends to be adjusted in a specified numerical value range, from 0.40 to 1.50.

In addition to this, the inventor has also found that, in a case in which the method of producing the plated layer with hot-dip plating treatment is adopted, the temperature of the plating bath, the temperature of the steel sheet during dipping in the plating bath, cooling conditions of a plated metal attached to the steel sheet, and the like satisfy specified conditions, whereby the average value of the ratio can be particularly adjusted in a specified numerical value range, from 0.40 to 1.50. The influence of the temperature of the plating bath, the temperature of the steel sheet during dipping in the plating bath, and cooling conditions of a plated metal attached to the steel sheet, and the like which satisfy specified conditions, on the average value of the ratio, is described in detail in "Conditions for Carrying out Plating Processing" in "Method of Producing Plated Layer".

In the disclosure, the average value of the atomic concentration of each of the aluminum, the zinc, and the magnesium in the outermost layer at a depth of 5 nm in the plated layer is a value obtained by defining the total of the aluminum, the zinc, and the magnesium as main elements contained in the plated layer, as the whole, and considering the proportion with respect to the total. The average value of the ratio of the atomic concentration of the aluminum with respect to the total of the atomic concentration of the magnesium and the atomic concentration of the zinc in the outermost layer at a depth of 5 nm in the plated layer is calculated based on the thus obtained average value of each element of the aluminum, the zinc, and the magnesium.

### <<Atomic Composition of Each Metal in Outermost Layer of Plated Layer>>

As described above, the average value of the atomic concentration of the aluminum, the zinc, and the magnesium in the outermost layer at a depth of 5 nm in the plated layer is also preferably adjusted in a specified numerical value range.

The average value of the atomic concentration of the aluminum in the outermost layer at a depth of 5 nm in the plated layer is preferably 20% by atom or more. In a case in which the average value is 20% by atom or more, the atomic concentration of the aluminum in the outermost layer is not excessively lower, and therefore the average value of the ratio is moderately higher. Therefore, not only corrosion resistance of the plated layer is maintained, but also blackening resistance of the plated layer under a normal environment can be more enhanced. The average value is more preferably 27% by atom or more, still more preferably 30% by atom or more, particularly preferably 35% by atom or more.

The average value of the atomic concentration of the aluminum in the outermost layer at a depth of 5 nm in the plated layer is preferably 60% by atom or less. In a case in which the average value is 60% by atom or less, the atomic concentration of the aluminum in the outermost layer is not excessively higher, and therefore the average value of the ratio is moderately lower. Therefore, the plated layer not only can be inhibited from deteriorating in blackening resistance, but also can ensure coating film adhesiveness and corrosion resistance. The average value is more preferably 55% by atom or less, still more preferably 50% by atom or less.

The average value of the atomic concentration of the zinc in the outermost layer at a depth of 5 nm in the plated layer is preferably 1% by atom or more. In a case in which the average value is 1% by atom or more, the atomic concentration of the zinc in the outermost layer is not excessively lower and therefore the average value of the ratio is moderately lower. Therefore, corrosion resistance and adhesiveness of the plated layer can be more enhanced. The average value is more preferably 2% by atom or more, still more preferably 2.5% by atom or more, particularly preferably 5% by atom or more.

The average value of the atomic concentration of the zinc in the outermost layer at a depth of 5 nm in the plated layer is preferably 40% by atom or less. In a case in which the average value is 40% by atom or less, the atomic concentration of the zinc in the outermost layer is not excessively higher and therefore the average value of the ratio is moderately lower. Therefore, blackening resistance of the plated layer can be more enhanced. The average value is preferably 10% by atom or less, still more preferably 8% by atom or less, particularly preferably 6% by atom or less.

The average value of the atomic concentration of the magnesium in the outermost layer at a depth of 5 nm in the plated layer is preferably 10% by atom or more. In a case in which the average value is 10% by atom or more, the atomic concentration of the magnesium in the outermost layer is not excessively lower, and therefore the average value of the ratio is moderately lower. Therefore, not only blackening resistance of the plated layer is ensured, but also corrosion resistance and adhesiveness of the plated layer can be more enhanced. The average value is more preferably 30% by atom or more, still more preferably 40% by atom or more, particularly preferably 45% by atom or more.

The average value of the atomic concentration of the magnesium in the outermost layer at a depth of 5 nm in the plated layer is preferably 75% by atom. In a case in which the average value is 75% by atom or less, the atomic concentration of the magnesium in the outermost layer is not excessively higher and therefore the average value of the ratio is moderately lower. Therefore, not only deterioration in blackening resistance of the plated layer under a normal environment is suppressed, but also binding between the plated layer and the phosphorus compound (C1) contained in the protective layer is stronger, and therefore coating film adhesiveness of the plated layer can be ensured. The average value is more preferably 70% by atom or less, still more preferably 60% by atom or less, particularly preferably 65% by atom or less.

As described above, preferably, the average value of the atomic concentration of the aluminum in the outermost layer at a depth of 5 nm in the plated layer is from 20% by atom to 60% by atom,
the average value of the atomic concentration of the magnesium in the outermost layer at a depth of 5 nm in the plated layer is from 10% by atom to 75% by atom, and
the average value of the atomic concentration of the zinc in the outermost layer at a depth of 5 nm in the plated layer is from 1% by atom to 40% by atom.

In another aspect, it is preferable in the outermost layer at a depth of 5 nm in the plated layer that the average value of the atomic concentration of the aluminum is from 20% by atom to 60% by atom, the average value of the atomic concentration of the magnesium is from 30% by atom to 75% by atom, and the average value of the atomic concentration of the zinc is from 1% by atom to 10% by atom. In a case in which the atomic concentration of each of the metals in the outermost layer of the plated layer is in such a range, the aluminum is relatively more present in the outermost layer, and an advantage is that favorable blackening resistance is easily obtained.

In a case in which the atomic concentrations in the outermost layer at a depth of 5 nm in the plated layer are studied, a particularly preferred lower limit of the average value of the atomic concentration of the aluminum is 25% by atom, 30% by atom, or 35% by atom.

A particularly preferred upper limit of the average value of the atomic concentration of the aluminum is 55% by atom, or 50% by atom.

The lower limit of the average value of the atomic concentration of the magnesium is 30% by atom, 35% by atom, or 40% by atom.

The upper limit of the average value of the atomic concentration of the magnesium is 65% by atom, 60% by atom, 55% by atom, or 50% by atom.

The lower limit of the average value of the atomic concentration of the zinc is 1% by atom, 1.5% by atom, or 2% by atom.

The upper limit of the average value of the atomic concentration of the zinc is 10% by atom, 8% by atom, or 5% by atom.

In another aspect, it is also preferable in the outermost layer at a depth of 5 nm in the plated layer that the average value of the atomic concentration of the aluminum is from 25% by atom to 60% by atom, the average value of the atomic concentration of the magnesium is from 10% by atom to 60% by atom, and the average value of the atomic concentration of the zinc is from 5% by atom to 40% by atom. In a case in which the atomic concentration of each of the metals in the outermost layer of the plated layer is in such a range, the zinc is relatively more present in the outermost layer, and an advantage is that adhesiveness with the protective layer is enhanced and favorable corrosion resistance is easily obtained.

In a case in which the atomic concentrations in the outermost layer at a depth of 5 nm in the plated layer are studied, a particularly preferred lower limit of the average value of the atomic concentration of the aluminum is 30% by mass, or 35% by mass.

A particularly preferred upper limit of the average value of the atomic concentration of the aluminum is 55% by mass, or 50% by mass.

A particularly preferred lower limit of the average value of the atomic concentration of the magnesium is 12% by mass, or 17% by mass.

A particularly preferred upper limit of the average value of the atomic concentration of the magnesium is 55% by mass, or 50% by mass.

A particularly preferred lower limit of the average value of the atomic concentration of the zinc is 7% by mass, or 10% by mass.

A particularly preferred upper limit of the average value of the atomic concentration of the zinc is 38% by mass, or 35% by mass.

The average value of the atomic concentration of each of the aluminum, the zinc, and the magnesium in the outermost layer at a depth of 5 nm in the plated layer can be measured by X-ray photoelectron spectroscopy (XPS). Specifically, the atomic concentrations of the aluminum, the zinc, and the magnesium in the plated layer can be respectively measured by quantitative determination from peak intensities assigned to Al2p, Zn2p3, and Mg1s obtained by measurement. A more specific measurement method is described in Examples below.

### <<Composition of Entire Plated Layer>>

As described above, in an embodiment, the composition of the metals contained in the plated layer is preferably appropriately adjusted.

The proportion of the aluminum in the plated layer is preferably 5.0% by mass or more. In this case, the proportion of the aluminum in the plated layer is moderately higher and therefore the average value of the atomic concentration of the aluminum in the outermost layer of the plated layer is not excessively lower. Therefore, the average value of the ratio is moderately higher. Thus, not only corrosion resistance of the plated layer is maintained, but also blackening resistance of the plated layer under a normal environment can be more enhanced. The proportion is more preferably 45.0% by mass or more, still more preferably 50.0% by mass or more.

The proportion of the aluminum in the plated layer is preferably 65.0% by mass or less. In this case, the proportion of the aluminum in the plated layer is moderately lower and therefore the average value of the atomic concentration of the aluminum in the outermost layer of the plated layer is not excessively higher. Therefore, the average value of the ratio is moderately lower. Thus, not only hardening of the plated layer is suppressed, but also adhesiveness and corrosion resistance of the plated layer can be more ensured. The proportion is more preferably 60.0% by mass or less, still more preferably 25.0% by mass or less.

The proportion of the magnesium in the plated layer is preferably 0.5% by mass or more. In this case, the proportion of the magnesium in the plated layer is moderately higher and therefore the average value of the atomic concentration of the magnesium in the outermost layer of the plated layer is not excessively lower. Therefore, the average value of the ratio is moderately lower. Thus, not only blackening resistance of the plated layer is ensured, but also corrosion resistance and adhesiveness of the plated layer can be more enhanced. The proportion is more preferably 1.0% by mass or more, still more preferably 1.5% by mass or more.

The proportion of the magnesium in the plated layer is preferably 10.0% by mass or less. In this case, the proportion of the magnesium in the plated layer is moderately lower and therefore the average value of the atomic concentration of the magnesium in the outermost layer of the plated layer is not excessively higher. Therefore, the average value of the ratio is moderately higher. Thus, not only the appearance of the plated layer is improved, but also blackening resistance of the plated layer under a normal environment can be more enhanced. The proportion is preferably 5.0% by mass, still more preferably 3.0% by mass or less.

The plated layer may contain silicon. The proportion of the silicon in the plated layer is preferably 1.0% by mass or more. In this case, alloying of aluminum in the plating bath and a component of the steel sheet is particularly suppressed during production of the plated layer by hot-dip plating treatment. The proportion of the silicon in the plated layer is preferably 3.0% by mass or less. In this case, the occurrence of dross due to silicon during production of the plated layer by hot-dip plating treatment can be particularly suppressed.

In a case in which the plated layer does not contain silicon, the total proportion of the aluminum, the magnesium, and the zinc in the plated layer with respect to the plated layer is preferably 95.0% by mass or more. In a case in which the plated layer contains silicon, the total proportion of the aluminum, the magnesium, the silicon, and the zinc in the plated layer is preferably 95.0% by mass or more.

The plated layer may further contain one or more elements selected from Ni, Ce, Cr, Fe, Ca, Sr, or rare earth. In particular, the plated layer preferably contains one or more of Ni or Cr. In a case in which the plated layer contains Ni, the proportion of the Ni in the plated layer preferably falls within a range of from more than 0% by mass to 1% by mass. The proportion is still more preferably from 0.01% by mass to 0.5% by mass. In a case in which the plated layer contains Cr, the proportion of the Cr in the plated layer preferably falls within a range of from more than 0% by mass to 1% by mass. The proportion is still more preferably from 0.01% by mass to 0.5% by mass. In these cases, the coated plated steel sheet has excellent corrosion resistance.

The plated layer also preferably contains one or more of Ca, Sr, Y, La, or Ce. In a case in which the plated layer contains Ca, the proportion of the Ca in the plated layer preferably falls within a range of from more than 0% by mass to 0.5% by mass. The proportion is still more preferably from 0.001% by mass to 0.1% by mass. In a case in which the plated layer contains Sr, the proportion of the Sr in the plated layer preferably falls within a range of from more than 0% by mass to 0.5% by mass. The proportion is still more preferably from 0.001% by mass to 0.1% by mass. In a case in which the plated layer contains Y, the proportion of the Y in the plated layer preferably falls within a range of from more than 0% by mass to 0.5% by mass. The proportion is still more preferably from 0.001% by mass to 0.1% by mass. In a case in which the plated layer contains La, the proportion of La in the plated layer preferably falls within a range of from more than 0% by mass to 0.5% by mass. The proportion is still more preferably from 0.001% by mass to 0.1% by mass. In a case in which the plated layer contains Ce, the proportion of the Ce in the plated layer preferably falls within a range of from more than 0% by mass to 0.5% by mass. The proportion is still more preferably from 0.001% by mass to 0.1% by mass.

The proportion of the Ca in the plated layer is particularly preferably from 50 ppm by mass to 400 ppm by mass. The proportion of the Ca contained in the plated layer is adjusted in a specified numerical value range, whereby concentrating of magnesium in the outermost layer of the plated layer can be suppressed. As a result, the average value of the ratio of the atomic concentration of the aluminum with respect to the total of the atomic concentration of the magnesium and the atomic concentration of the zinc in the outermost layer at a depth of 5 nm in the plated layer can be particularly adjusted within a specified numerical value range, from 0.40 to 1.50. The proportion of the Ca in the plated layer is preferably 70 ppm by mass or more, still more preferably 90 ppm by mass or more. The proportion of the Ca in the plated layer is preferably 300 ppm by mass or less, still more preferably 250 ppm by mass or less.

Of course, the plated layer may contain an inevitably incorporated element other than the above.

As described above, it is preferable that the proportion of the aluminum in the plated layer is from 5.0% by mass to 65.0% by mass and the proportion of the magnesium in the plated layer is from 0.5% by mass to 10.0% by mass.

In particular, it is preferable that the proportion of the aluminum in the plated layer is from 45.0% by mass to 65.0% by mass, the proportion of the magnesium in the plated layer is from 0.5% by mass to 5.0% by mass, and the proportion of the Ca in the plated layer is from 50 ppm by mass to 400 ppm by mass. In a case in which the composition of the entire plated layer is in such a range, the aluminum is relatively more present in the outermost layer and an advantage is that favorable blackening resistance is easily obtained.

In the composition of the entire plated layer, a particularly preferred lower limit of the proportion of the aluminum in the plated layer is 46.0% by mass, 48.0% by mass, or 50.0% by mass.

A particularly preferred upper limit of the proportion of the aluminum in the plated layer is 63.0% by mass, 60.0% by mass, or 58% by mass.

A particularly preferred lower limit of the proportion of the magnesium in the plated layer is 0.8% by mass, 1.0% by mass, or 1.5% by mass.

A particularly preferred upper limit of the proportion of the magnesium in the plated layer is 4.0% by mass, 3.5% by mass, or 3.0% by mass.

In particular, it is also preferable that the proportion of the aluminum in the plated layer is from 5.0% by mass to 25.0% by mass and the proportion of the magnesium in the plated layer is from 1.5% by mass to 10.0% by mass. In a case in which the composition of the entire plated layer is in such a range, the magnesium and the zinc are relatively more present in the outermost layer and an advantage is that adhesiveness with the protective layer is enhanced and favorable corrosion resistance is easily obtained.

In the composition of the entire plated layer, a particularly preferred lower limit of the proportion of the aluminum in the plated layer is 6.0% by mass, 9.0% by mass, or 10.0% by mass.

A particularly preferred upper limit of the proportion of the aluminum in the plated layer is 24.0% by mass, 22.0% by mass, or 20.0% by mass.

A particularly preferred lower limit of the proportion of the magnesium in the plated layer is 1.8% by mass, 2.0% by mass, or 2.2% by mass.

A particularly preferred upper limit of the proportion of the magnesium in the plated layer is 9.0% by mass, 8.0% by mass, or 7.0% by mass.

The composition of the metals contained in the plated layer can also be a desired numerical value by devising a plating treatment method, namely, adopting "Method of Producing Plated Layer" described below, as in the average value of the ratio of the atomic concentrations of the metals in the outermost layer at a depth of 5 nm in the plated layer.

The proportion of each metal contained in the plated layer and the proportion of each atom in the plated layer can be measured by X-ray photoelectron spectroscopy (XPS). Specifically, the proportions of the aluminum, the zinc, and the magnesium in the plated layer can be measured by quantitative determination from peak intensities assigned to Al2p, Zn2p3, and Mg1s obtained by measurement. A more specific measurement method is described in Examples below.

### <<Chemical State of Cobalt Present in Plated Layer>>

In a case in which the average value of the atomic concentration of the aluminum is from 25% by atom to 60% by atom, the average value of the atomic concentration of the magnesium is from 10% by atom to 60% by atom, and the average value of the atomic concentration of the zinc is from 5% by atom to 40% by atom in the outermost layer at a depth of 5 nm in the plated layer, or in a case in which the proportion of the aluminum in the plated layer is from 5.0% by mass to 25.0% by mass and the proportion of the magnesium in the plated layer is from 1.5% by mass to 10.0% by mass, 5% by mol or more of a chemical state of cobalt present at the interface between the plated layer and the protective layer is preferably metal cobalt.

The proportion of the metal cobalt present at the interface between the plated layer and the protective layer is still more preferably 7% by mol or more, 10% by mol or more, 15% by mol or more, or 20% by mol or more in terms of cobalt.

The amount of presence of the cobalt present at the interface between the plated layer and the protective layer is preferably from 0.1 to 20.0 mg/m².

The plated layer having the above composition has a low proportion of the aluminum in the plated layer, and thus is relatively easily higher in atomic concentration of the zinc in the outermost layer in the plated layer, and thus the variation in degree of blackening may occur. In a case in which a trace amount of cobalt is present at the interface between the plated layer and the protective layer, stable blackening resistance by the blackening resistance enhancement effect of metal cobalt and the synergistic effect with the protective layer can be obtained. Therefore, dipping treatment with an aqueous solution of cobalt sulfate (for example, an aqueous solution obtained by dissolving cobalt sulfate heptahydrate in water and adjusting the pH to from about 2.0 to 3.0 with sulfuric acid) is desirably applied to the plated layer. This treatment is applied to precipitate metal cobalt on a plated layer surface. The metal cobalt is coated with a protective layer and thus formed into an ionic compound or an oxide, whereas the metal cobalt partially remains, thereby enhancing blackening resistance.

Accordingly, in a case in which the composition of the plated layer is the above composition, the proportion of the metal cobalt present at the interface between the plated layer and the protective layer may be 5% by mol or more (preferably 7% by mol or more, 10% by mol or more, 15% by mol or more, or 20% by mol or more).

Herein, in a case in which the proportion of the metal cobalt is high, corrosion resistance tends to deteriorate due to the difference in potential on a plated layer surface. Therefore, the proportion is preferably 65% by mol or less, particularly preferably 45% by mol or less.

The method of measuring the proportion (% by mol) of the metal cobalt present at the interface between the plated layer and the protective layer is described in Examples below.

Similarly, the method of measuring the amount of presence of the cobalt is also described in Examples below.

### <Method of Producing Plated Layer>

The method of producing the plated layer is described.

An appropriate method can be adopted as the method of producing the plated layer, and a method with hot-dip plating treatment is preferred as described above. The method with hot-dip plating treatment allows a plated layer to be produced by, for example, dipping a steel sheet in a plating bath prepared by metal fusion. The plated layer thus produced tends to have an atomic concentration composition of metals in an outermost layer at a specified depth, specifically, at a depth of 5 nm in the plated layer, adjusted in a specified numerical value range. The plated layer has high blackening resistance under a normal environment, and therefore the coated plated steel sheet can ensure blackening resistance under various environments.

### <<Composition of Plating Bath>>

The plating bath to be used is prepared so as to contain aluminum, zinc, and magnesium as constituent elements and allow for adjustment of the atomic concentrations of the aluminum, the zinc, and the magnesium in the outermost layer at a depth of 5 nm in the plated layer. In other words, the plating bath contains aluminum, zinc, and magnesium as constituent elements, and the composition of the constituent elements in the plating bath is adjusted, whereby a plated layer having the above composition can be produced. Thus, high blackening resistance under a normal environment is imparted to such a plated layer.

The plating bath to be used is prepared so as to contain aluminum, zinc, and magnesium as constituent elements and allow for adjustment of the average value of the ratio of the atomic concentration of the aluminum with respect to the total of the atomic concentration of the magnesium and the atomic concentration of the zinc in the outermost layer at a depth of 5 nm in the plated layer, in a specified numerical value range. In other words, the plating bath contains aluminum, zinc, and magnesium as constituent elements and the composition of the constituent elements in the plating bath is adjusted, whereby a plated layer in which the average value of the ratio of the atomic concentration of the aluminum with respect to the total of the atomic concentration of the magnesium and the atomic concentration of the zinc in the outermost layer at a depth of 5 nm in the plated layer falls within a specified numerical value range can be formed. Thus, high blackening resistance under a normal environment is imparted to such a plated layer.

The plating bath may contain silicon. The plating bath may further contain one or more elements selected from Ni, Ce, Cr, Fe, Ca, Sr, or rare earth. In particular, the plating bath preferably contains one or more of Ni or Cr. The plating bath also preferably contains one or more of Ca, Sr, Y, La, or Ce.

In particular, the proportion of the Ca present in the plating bath is adjusted within a specified range, whereby the atomic concentration of each of the metals in the outermost layer at a depth of 5 nm can be adjusted. Specifically, the proportion of the Ca in the plating bath, with respect to the plating bath, is preferably from 50 ppm by mass to 400 ppm by mass. The proportion of the Ca contained in the plating bath is adjusted in the above specified numerical value range, whereby concentrating of magnesium in the outermost layer of the plated layer can be suppressed. As a result, the average value of the ratio of the atomic concentration of the aluminum with respect to the total of the atomic concentration of the magnesium and the atomic concentration of the zinc in the outermost layer at a depth of 5 nm in the plated layer can be adjusted within a specified numerical value range, from 0.40 to 1.50. The proportion of the Ca in the plating bath, with respect to the plating bath, is preferably 70 ppm by mass or more, still more preferably 90 ppm by mass or more. The proportion of the Ca in the plating bath, with respect to the plating bath, is preferably 300 ppm by mass or less, still more preferably 250 ppm by mass or less.

### <<Conditions for Carrying out Plating Processing>>

The atomic concentration of each of the metals in the outermost layer at a specified depth, specifically, at a depth of 5 nm in the plated layer can also be achieved by appropriately adjusting conditions for carrying out plating treatment. Specifically, plating treatment is applied with a plating treatment apparatus illustrated in FIG. 1, in plating treatment conditions appropriately adjusted, whereby a plated layer in which the atomic concentration of each of the metals in the outermost layer is adjusted in a desired numerical value range can be produced.

The plating treatment apparatus illustrated in FIG. 1 includes a conveyance apparatus that continuously conveys a steel sheet 1. The conveyance apparatus is configured from a feeding machine 3, a winding machine 12, and a plurality of conveyance rolls 15. In the conveyance apparatus, the feeding machine 3 retains a coil 13 (first coil 13) of the steel sheet 1 that is long. The first coil 13 is unwound on the feeding machine 3, and conveyed to the winding machine 12 with the steel sheet 1 being supported on the conveyance rolls 15. Furthermore, the winding machine 12 winds the steel sheet 1, and the winding machine 12 retains a coil 14 (second coil 14) of the steel sheet 1.

In the plating treatment apparatus, a heating furnace 4, an annealing/cooling section 5, a snout 6, a pot 7, a spray nozzle 9, a cooling apparatus 10, and a temper rolling/shape correcting apparatus 11 are sequentially provided in the listed order from the upstream side of a conveyance path of the steel sheet 1 in the conveyance apparatus. The heating furnace 4 heats the steel sheet 1. The heating furnace 4 is configured with a non-oxidation furnace or the like. The annealing/cooling section 5 heats and anneals, and subsequently cools the steel sheet 1. The annealing/cooling section 5 is linked to the heating furnace 4, and an annealing furnace is provided on the upstream side and a cooling zone (cooling machine) is provided on the downstream side, respectively. The interior of the annealing/cooling section 5 is retained in a reducing atmosphere. The snout 6 is a cylindrical member in which the steel sheet 1 is conveyed, and one end thereof is linked to the annealing/cooling section 5 and the other end thereof is placed in the plating bath in the pot 7. The interior of the snout 6 is retained in a reducing atmosphere, as in the case of the annealing/cooling section 5. The pot 7 is a container that reserves the plating bath 2, and a sink roll 8 is placed in the pot. The spray nozzle 9 sprays a gas toward the steel sheet 1. The spray nozzle 9 is placed above the pot 7. The spray nozzle 9 is placed at a position at which the gas can be sprayed toward both surfaces of the steel sheet 1 pulled up from the pot 7. The cooling apparatus 10 cools a plated metal attached to the steel sheet 1. An air-cooling machine, a mist cooling machine, or the like is provided as the cooling apparatus 10, and the steel sheet 1 is cooled by the cooling apparatus 10. The steel sheet 1, in which a plated layer is formed, is cooled by the temper rolling/shape correcting apparatus 11. The temper rolling/shape correcting apparatus 11 includes a skin pass mill or the like for applying temper rolling to the steel sheet 1, a tension leveler for applying shape correcting to the steel sheet 1 after temper rolling, and the like.

In the plating treatment with the plating treatment apparatus in FIG. 1, first, the steel sheet 1 is unwound from the feeding machine 3, and continuously fed. The steel sheet 1 is heated by the heating furnace 4, and then conveyed to the annealing/cooling section 5 in a reducing atmosphere, and the steel sheet 1 is annealed in the annealing furnace and at the same time passes through the snout 6, and furthermore enters the pot 7 and is dipped in the plating bath 2 in the pot 7.

In a case in which the aluminum concentration in the plating bath 2 is more than 50% by mass, the temperature of the plating bath 2 preferably falls within a range of from 550°C to 700°C. In a case in which the aluminum concentration in the plating bath 2 is 50% by mass or less, the temperature is preferably in a range of from 420°C to 600°C.

In these cases, the average value of the ratio of the atomic concentration of the aluminum with respect to the total of the atomic concentration of the magnesium and the atomic concentration of the zinc in the outermost layer at a depth of 5 nm in the plated layer tends to be adjusted within a specified numerical value range, from 0.40 to 1.50.

In a case in which the aluminum concentration in the plating bath 2 is more than 50% by mass and the temperature of the plating bath 2 is 670°C or less, the proportion of Al contained in an alloy layer formed by alloying the steel sheet 1 and a component in the plating bath is moderately lower, and therefore the proportion of Al present in the outermost layer of the plated layer tends to be higher. Thus, the average value of the ratio is moderately higher, and as a result, tends to be easily adjusted in a specified numerical value range. In a case in which the aluminum concentration in the plating bath 2 is more than 50% by mass and the temperature of the plating bath 2 is 550°C or more, the proportion of Al contained in an alloy layer at an interface formed by alloying the steel sheet 1 and a component in the plating bath is moderately higher, and therefore the proportion of Al present in the outermost layer of the plated layer tends to be lower. Thus, the average value of the ratio is moderately lower, and as a result, tends to be easily adjusted in a specified numerical value range. The temperature of the plating bath 2 is more preferably 570°C or more, still more preferably 585°C or more. The temperature of the plating bath 2 is more preferably 650°C or less, still more preferably 630°C or less.

In a case in which the aluminum concentration in the plating bath 2 is 50% by mass or less and the temperature of the plating bath 2 is 600°C or less, the proportion of Al contained in an alloy layer formed by alloying the steel sheet 1 and a component in the plating bath is moderately lower, and therefore the proportion of Al present in the outermost layer of the plated layer tends to be higher. Thus, the average value of the ratio is moderately higher, and as a result, tends to be easily adjusted in a specified numerical value range. In a case in which the aluminum concentration in the plating bath 2 is 50% by mass or less and the temperature of the plating bath 2 is 420°C or more, the proportion of Al contained in an alloy layer at an interface formed by alloying the steel sheet 1 and a component in the plating bath is moderately higher, and therefore the proportion of Al present in the outermost layer of the plated layer tends to be lower. Thus, the average value of the ratio is moderately lower, and as a result, tends to be easily adjusted in a specified numerical value range. The temperature of the plating bath 2 is more preferably 450°C or more, still more preferably 470°C or more. The temperature of the plating bath 2 is more preferably 550°C or less, still more preferably 530°C or less.

The steel sheet 1 is supported by the sink roll 8 in the pot 7, thus the conveyance direction thereof is converted to the upper direction, and the steel sheet is drawn from the plating bath 2. Thus, a plated metal is attached to the steel sheet 1.

Next, a gas is sprayed from the spray nozzle 9 to both surfaces of the steel sheet 1, whereby the amount of attachment of the plated metal attached to the steel sheet 1 is adjusted. The method of adjusting the amount of attachment with such gas spraying is referred to as "gas wiping method". The amount of attachment of the plated metal is preferably adjusted in a range of from 40 g/m² to 200 g/m² in total of both surfaces of the steel sheet 1. Examples of the types of the gas (wiping gas) sprayed toward the steel sheet 1 in the gas wiping method include atmospheric air, nitrogen, argon, helium, or steam. Such a wiping gas may be preliminarily heated and then sprayed toward the steel sheet 1.

The method of adjusting the amount of attachment of plating is not limited to the above gas wiping method, and various control methods of the amount of attachment can be applied. Examples of a control method of the amount of attachment, other than the gas wiping method, include a roll-squeezing method including allowing the steel sheet 1 to pass between paired rolls placed immediately on a bath surface of the plating bath 2, a method including placing a shielding plate near the steel sheet 1 drawn from the plating bath 2 and sweeping the plated metal with the shielding plate, a wiping method with electromagnetic force, including applying force that allows the plated metal attached to the steel sheet 1 to move downward with electromagnetic force, or a method of adjusting the amount of attachment of plating with falling by natural gravity, without application of any external force. Two or more of such adjustment methods may be combined to adjust the amount of attachment of plating of the steel sheet 1.

Next, the steel sheet 1 is conveyed further above a position at which the spray nozzle 9 is placed, and then supported with two conveyance rolls 15 and thus conveyed so as to be folded back downward. In other words, the steel sheet 1 is conveyed on an inverted U-shaped path. The steel sheet 1 is cooled on the inverted U-shaped path by air-cooling, mist cooling, or the like in the cooling apparatus 10. Thus, the plated metal attached on a surface of the steel sheet 1 is solidified and the plated layer is formed.

Cooling conditions in solidification of the plated metal are adjusted for formation of the plated layer, whereby the atomic concentrations of the aluminum, the zinc, and the magnesium in the outermost layer at a depth of 5 nm in the plated layer can be particularly adjusted in specified numerical value ranges.

The surface of the steel sheet 1 is cooled by the cooling apparatus 10 in order to completely terminate solidification of the plated metal. Such cooling is here preferably made until the surface temperature of the plated metal (or plated layer) reaches 300°C or less. The surface temperature of the plated metal is measured with, for example, a radiation thermometer.

In order to control the cooling rate of the steel sheet 1, the cooling apparatus 10 preferably includes a temperature control function for regulating the temperature of the steel sheet 1 along with the conveyance direction and the plate width direction. The cooling apparatus 10 may be divided to plural portions along with the conveyance direction of the steel sheet 1. In other words, a primary cooling apparatus 101 that cools the steel sheet 1 and a secondary cooling apparatus 102 that cools the steel sheet 1 on the downstream side relative to the primary cooling apparatus 101 may be provided on a path for conveyance further above a position at which the spray nozzle 9 is placed. In a case in which the primary cooling apparatus 101 and the secondary cooling apparatus 102 are thus provided, it is preferable to cool the steel sheet 1 by the primary cooling apparatus 101 until the temperature of the surface of the plated metal reaches a temperature of 300°C or less. Furthermore, it is preferable to cool the steel sheet 1 by the secondary cooling apparatus 102 so that the temperature in introduction into the temper rolling/shape correcting apparatus 11 reaches 100°C or less.

The cooling rate of a surface of the plated metal during a reduction in surface temperature of the plated metal attached to the steel sheet 1, from 500°C to 400°C, in the course of cooling of the steel sheet 1 is preferably from 10°C/sec to 70°C/sec. In this case, the average value of the ratio of the atomic concentration of the aluminum with respect to the total of the atomic concentration of the magnesium and the atomic concentration of the zinc in the outermost layer at a depth of 5 nm in the plated layer tends to be adjusted within a specified numerical value range, from 0.40 to 1.50. This is described in detail that the solidification region of the zinc contained in the plated metal is in a range of from 400°C to 500°C, therefore, the cooling rate is set to 10°C/sec or more, whereby the concentration of zinc on the surface of the plated metal can be suppressed. Thus, the average value of the ratio is moderately higher, and the average value of the ratio is easily adjusted in a specified numerical value range. The cooling rate is more preferably 15°C/sec or more, still more preferably 20°C/sec or more. The cooling rate is preferably 70°C/sec or less, more preferably 60°C/sec or less, still more preferably 50°C/sec. In this case, a beautiful appearance of the coated plated steel sheet can be ensured.

When the steel sheet 1 is drawn from the plating bath 2, the steel sheet may be drawn into a non-oxidizing atmosphere or a low-oxidizing atmosphere, and furthermore the steel sheet 1 may be subjected to adjustment of the amount of attachment of the plated metal by the gas wiping method in the non-oxidizing atmosphere or the low-oxidizing atmosphere.

The steel sheet 1 after cooling is subjected to temper rolling and then shape correcting in the temper rolling/shape correcting apparatus 11. The rolling reduction by temper rolling is preferably from 0.3% to 3.0%. The rate of elongation of the steel sheet 1 by shape correcting is preferably 3.0% or less.

Subsequently, the steel sheet 1 is wound up with the winding machine 12, and the coil 14 of the steel sheet 1 is retained in the winding machine 12.

These apparatuses may be appropriately designed by, if necessary, adding, removing, and/or replacing various functions in order to solve the problems of the disclosure. In other words, the configurations of the plating treatment apparatus, the heating apparatus, and the like can be variously designed depending on the shape or the like of the steel sheet 1.

### <Protective Layer>

The protective layer is described.

The protective layer contains the resin (A1), the silicon compound (B1), the phosphorus compound (C1), and the cobalt compound (D1) as described above.

The protective layer can be produced from, for example, an aqueous surface treatment agent containing a resin component (A2), a silane coupling agent (B2), a phosphorus compound (C2), and a cobalt compound (D2). In this case, the resin component (A2) is, for example, the resin (A1) itself in the protective layer, or a component to be cured and thus formed into the resin (A1). The protective layer can contain the silicon compound (B1), the phosphorus compound (C1), and the cobalt compound (D1) respectively derived from the silane coupling agent (B2), the phosphorus compound (C2), and the cobalt compound (D2) in the aqueous surface treatment agent. The phosphorus compound (C2) in the aqueous surface treatment agent and the phosphorus compound (C1) in the protective layer may be compounds that are the same as each other in terms of the structure or compounds that are different from each other in terms of the structure. The same also applies to a relationship between the cobalt compound (D2) and the cobalt compound (D1).

The protective layer may further contain at least one of a titanium compound (E1) or a vanadium compound (F1), in addition to the resin (A1), the silicon compound (B1), the phosphorus compound (C1), and the cobalt compound (D1). In this case, the protective layer can be produced from, for example, an aqueous surface treatment agent further containing a titanium compound (E2) and a vanadium compound (F2), in addition to the resin component (A2), the silane coupling agent (B2), the phosphorus compound (C2), and the cobalt compound (D2). The titanium compound (E2) in the aqueous surface treatment agent and the titanium compound (E1) in the protective layer may be compounds that are the same as each other in terms of the structure or compounds that are different from each other in terms of the structure. The same also applies to a relationship between the vanadium compound (F2) and the vanadium compound (F1).

The resin component (A2) may contain any of a polymer, an oligomer, or a monomer.

The resin component (A2) preferably is aqueous, namely, preferably has water dispersibility, is an emulsion, or has water solubility. The resin component (A2) particularly preferably has water solubility. In this case, the protective layer is hardly whitened due to dew condensation or the like and can have water resistance. In a case in which the resin component (A2) has water dispersibility, each of the resin component (A2) and the resin (A1) preferably contains a cationic resin whose surface is amine-modified or an anionic resin whose surface is carboxy-modified. In this case, the resin component (A2) and the silane coupling agent (B2) can stably coexist in the aqueous surface treatment agent.

The particle size of the resin component (A2) is, for example, from 9 nm to 200 nm. While an adverse influence of hydrophilization due to amine modification or carboxy modification can be reduced as the particle size is larger, excessively large particle sizes tend to cause drying of the aqueous surface treatment agent and inhibit a coating film from being formed in the course of production of the protective layer.

The resin component (A2) contains at least one selected from the group consisting of, for example, a polyurethane resin, a phenol resin, and a (meth)acrylic resin. In this case, the resin (A1) in the protective layer contains at least one selected from the group consisting of a polyurethane resin, a phenol resin, and a (meth)acrylic resin. Such a resin is preferred because it has moderate adhesiveness with the plated layer and thus easily enhances corrosion resistance.

Each of the resin component (A2) in the aqueous surface treatment agent and the resin (A1) in the protective layer may be a cationic resin or an anionic resin, and is preferably a cationic resin from the viewpoint of treatment liquid stability in the case of coexistence with any other treatment liquid component.

Hereinafter, the detail of a preferred cationic resin is described.

In a case in which each of the resin component (A2) in the aqueous surface treatment agent and the resin (A1) in the protective layer contains a cationic polyurethane resin, the protective layer is more favorable in processability and adhesiveness.

The cationic polyurethane resin contains, for example, a polycarbonate-based water-dispersible cationic polyurethane resin containing a structural unit represented by the following Formula (1).

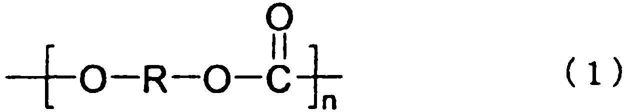

In Formula (1), R is an aliphatic alkylene group having from 4 to 9 carbon atoms, and n is an integer representing the number of structural units in a molecule. n is preferably the corresponding integer so that the number average molecular weight of a carbonate-based polyol being a raw material of the polycarbonate-based water-dispersible cationic polyurethane resin is in a range of from 500 to 5000.

In a case in which the resin component (A2) in the aqueous surface treatment agent and the resin (A1) in the protective layer contain a cationic phenol resin, the aqueous surface treatment agent is enhanced in stability, and the protective layer is enhanced in overcoat water-resistant secondary adhesiveness.

The cationic phenol resin has, for example, a repeating unit represented by Formula (2). In this case, the average degree of polymerization of the repeating unit in the cationic phenol resin is preferably from 2 to 50. In a case in which the average degree of polymerization falls within the range, the protective layer can be enhanced in water resistance. The average degree of polymerization of the repeating unit of Formula (2) can be determined from the integral ratio by ¹H-NMR.

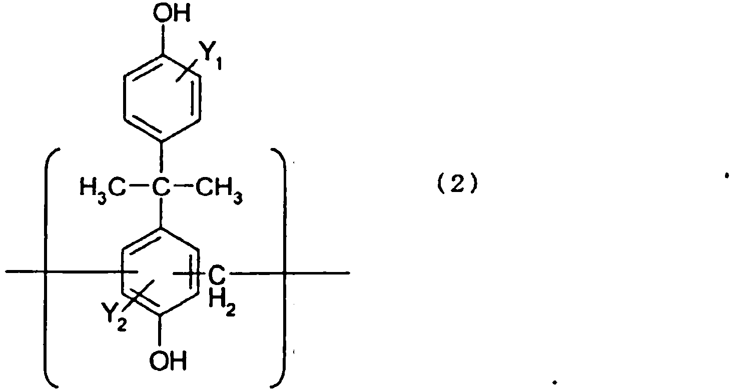

In Formula (2), each of Y₁ and Y₂ is independently a hydrogen or a substituent. The substituent is represented by Formula (3) or Formula (4). The number of substituents per benzene ring in the repeating unit in Formula (2) is from 0.2 to 1.0 on average. The number of substituents can be determined from the integral ratio by ¹H-NMR.

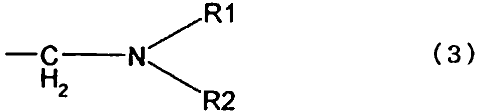

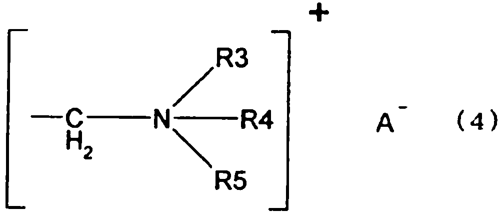

In each of Formula (3) and Formula (4), each of R1, R2, R3, R4 and R5 is a hydrogen atom, an alkyl group having from 1 to 10 carbon atoms, or a hydroxyalkyl group having from 1 to 10 carbon atoms. A⁻ is a hydroxide ion or an ion of oxoacid (for example, nitric acid, sulfuric acid, phosphoric acid, carbonic acid, or carboxylic acid).

A cationic (meth)acrylic resin contains, for example, a polymer containing a monomer having a functional group having a cation, as a constituent unit. In other words, the cationic (meth)acrylic resin contains a polymer containing at least one selected from the group consisting of a cationically polymerizable monomer (hereinafter, polymerizable monomer (M1)) and any other polymerizable monomer (hereinafter, also referred to as polymerizable monomer (M2)), as a constituent unit.

The polymerizable monomer (M1) has at least one of an amino group, an alkylamino group, or a quaternary ammonium group.

The polymerizable monomer (M1) contains at least one selected from the group consisting of, for example, N,N-dialkylaminoalkyl (meth)acrylate such as N,N-dimethylaminoethyl (meth)acrylate or N,N-dimethylaminopropyl (meth)acrylate; N-alkylaminoalkyl (meth)acrylate such as N-methylaminoethyl (meth)acrylate or N-methylaminopropyl (meth)acrylate; and a cationically polymerizable monomer having a quaternary ammonium group, such as methacryloyloxyethyl trimethylammonium chloride.

As described above, the cationically polymerizable monomer having an amino group has an alkylamino group. For example, in a case in which the alkylamino group is a primary alkylamino group, the number of carbon atoms in the alkyl group is preferably from 1 to 4, particularly preferably from 1 to 2. In a case in which an alkyl group is additionally bound to the alkylamino group, the number of carbon atoms in this alkyl group additionally bound is preferably from 1 to 6, particularly preferably from 1 to 4.

The polymerizable monomer (M2) contains at least one selected from the group consisting of, for example, (meth)acrylate such as methyl (meth)acrylate, ethyl (meth)acrylate, propyl (meth)acrylate, n-butyl (meth)acrylate, i-butyl (meth)acrylate, t-butyl (meth)acrylate, 2-ethylhexyl (meth)acrylate, lauryl (meth)acrylate, or stearyl (meth)acrylate; and an aromatic vinyl monomer such as styrene, α-methylstyrene, or vinyl toluene. In a case in which the polymerizable monomer (M2) contains alkyl (meth)acrylate, the number of carbon atoms in the alkyl group in the alkyl (meth)acrylate is preferably from 1 to 18.

The above monomer may be used singly, or in combination of two or more kinds, and then polymerized in order to obtain a polymer.

Hereinafter, the detail of a preferred anionic resin is described.

Examples of the anionic polyurethane resin include a water-soluble or water-dispersible urethane resin obtained by reacting an organic polyisocyanate compound and a polyol compound.

In particular, the anionic polyurethane resin is preferably a self-emulsifying type urethane resin.

Examples of the organic polyisocyanate compound include aliphatic diisocyanate such as phenylene diisocyanate, tolylene diisocyanate, diphenylmethane diisocyanate, or naphthalene diisocyanate; or alicyclic diisocyanate such as cyclohexane diisocyanate, isophorone diisocyanate, norbornane diisocyanate, xylylene diisocyanate, or tetramethylxylylene diisocyanate.

Examples of the polyol compound include polyester polyol, polyether polyol, polycarbonate polyol, polyacetal polyol, polyacrylate polyol, polyester amide polyol, or polyolefin polyol such as polybutadiene.

The self-emulsifying type urethane resin is produced by introducing a hydrophilic component such as a carboxylic acid-containing compound into a molecule. The anionic polyurethane resin can be obtained by introducing a hydroxyl group into a polymer backbone.

In a case in which the resin component (A2) in the aqueous surface treatment agent and the resin (A1) in the protective layer contain an anionic phenol resin, the aqueous surface treatment agent is enhanced in stability, and the protective layer is enhanced in overcoat water-resistant secondary adhesiveness.

The anionic phenol resin is a novolac-type phenol resin obtained by reacting a phenol compound and an aldehyde compound in the presence of an acidic catalyst, or a resol-type phenol resin obtained by reacting a phenol compound and an aldehyde compound in the presence of a basic catalyst. These may be used singly, or in mixture of two or more kinds thereof. The anionic phenol resin can be obtained by use of a water-soluble polymer having an anion group as any other polymer in the phenol resin.

An anionic (meth)acrylic resin is, for example, a polymer containing a monomer having a functional group having an anion, as a constituent unit. In other words, the anionic (meth)acrylic resin contains a polymer containing at least one selected from the group consisting of an anionically polymerizable monomer (hereinafter, polymerizable monomer (M3)) and any other polymerizable monomer (hereinafter, also referred to as polymerizable monomer (M4)), as a constituent unit.

The polymerizable monomer (M3) has at least one of a carboxyl group or a sulfone group.

One example of the carboxyl group-containing monomer is, for example, an unsaturated carboxylic acid such as an unsaturated carboxylic acid represented by the following Formula, an ester of the unsaturated carboxylic acid, or an anhydride of the unsaturated carboxylic acid.

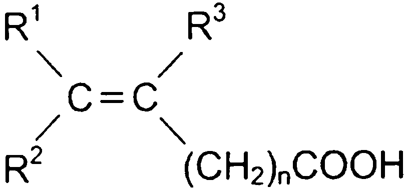

In Formula, each of R¹, R² and R³ is a hydrogen atom, an alkyl group, a carboxyl group, or an ester group. n falls within a range of an integer of from 0 to 20.

Examples of the unsaturated carboxylic acid include acrylic acid, methacrylic acid, vinyl acetic acid, crotonic acid, maleic acid, maleic acid monoester, 5-hexenoic acid, 5-heptenoic acid, or oleic acid.

Examples of the sulfone group-containing monomer include vinyl sulfonic acid, allyl sulfonic acid, methallyl sulfonic acid, styrene sulfonic acid, 2-acrylamide-2-methylpropanesulfonic acid, 2-methacryloyloxybutanesulfonic acid, allyloxybenzenesulfonic acid, or methallyloxybenzenesulfonic acid.

The above monomer may be used singly, or in combination of two or more kinds, and then polymerized in order to obtain a polymer.

Each of the resin component (A2) in the aqueous surface treatment agent and the resin (A1) in the protective layer may be used in combination with a nonionic resin together with the cationic resin or the anionic resin. In a case in which the nonionic resin is used in combination, treatment liquid stability is favorable in the case of coexistence with any other treatment liquid component.

The content of the nonionic resin may be 50% by mass or less with respect to the resin component (A2) in the aqueous surface treatment agent or the resin (A1) in the protective layer.

Examples of the nonionic resin include a nonionic urethane resin, a nonionic phenol resin, a nonionic acrylic resin, or a nonionic epoxy resin.

In a case in which the resin component (A2) contains the cationic resin, the aqueous surface treatment agent preferably contains a counter anion of a cationic resin component. The counter anion is preferably volatilized in the course of production of the protective layer by drying of the aqueous surface treatment agent. In this case, an amine in an amine-modified cationic resin contained in the resin component (A2) loses a charge and a particle of the resin component (A2) is hydrophobized and easily aggregated in the course of production of the protective layer.

Specifically, the counter anion preferably contains at least one of a formic acid ion or an acetic acid ion. In this case, in a case in which the counter anion is volatilized in the course of production of the protective layer by drying of the aqueous surface treatment agent, the pH of the aqueous surface treatment agent increases, thereby allowing silanolization by hydrolysis of the silane coupling agent (B2) to be promoted, and allowing gelation and condensation of the silane coupling agent (B2) to progress. Furthermore, a reaction of a side chain of the cationic resin component and the silane coupling agent (B2), and a reaction of silanol and a plated layer surface are promoted, and a network of cationic resin component-siloxane-metaloxane bond can be formed. Therefore, the protective layer can be enhanced in adhesiveness, corrosion resistance, and solvent resistance.

In a case in which the resin component (A2) is an anionic resin component, the aqueous surface treatment agent preferably contains a counter cation of the anionic resin component. The counter cation is preferably volatilized in the course of production of the protective layer by drying of the aqueous surface treatment agent. In this case, a carboxy group in a carboxy-modified anionic resin contained in the anionic resin component loses a charge, and a particle of the anionic resin component is hydrophobized and easily aggregated in the course of production of the protective layer.

Specifically, the counter anion preferably contains at least one of an ammonium ion or a carbonic acid ion. In this case, in a case in which the counter anion is volatilized in the course of production of the protective layer by drying of the aqueous surface treatment agent, the pH of the aqueous surface treatment agent decreases, thereby allowing silanolization by hydrolysis of the silane coupling agent and allowing gelation and condensation of the silane coupling agent to progress. Furthermore, a reaction of a side chain of the anionic resin component and the silane coupling agent, and a reaction of silanol and a plated layer surface are promoted, and a network of anionic resin component-siloxane-metasiloxane bond can be formed. Therefore, the protective layer can be enhanced in adhesiveness, corrosion resistance, and solvent resistance.

The silane coupling agent (B2) undergoes hydrolysis and condensation to form a siloxane compound having three-dimensional crosslinking with a siloxane bond in the course of production of the protective layer by drying of the aqueous surface treatment agent. Thus, the protective layer can contain a siloxane compound that is a silicon compound (B1) derived from the silane coupling agent (B2). The siloxane compound can enhance corrosion resistance, adhesiveness, and solvent resistance of the protective layer.

The silane coupling agent (B2) contains at least one of, for example, an alkoxysilane having 2 or more, preferably 3 or more alkoxy groups, or a partially hydrolyzed product thereof.

The alkoxy group of the silane coupling agent (B2) can be formed into silanol (-Si-OH) by hydrolysis in the aqueous surface treatment agent. The dispersion stability of the silanol is obtained at a pH of 6.5 or less. In a case in which the pH of the treatment agent is more than 6.5, the storage stability of the aqueous surface treatment agent can deteriorate due to gelation.

The silane coupling agent (B2) contains at least one selected from the group consisting of, for example, N-(aminoethyl)-3-aminopropyltrimethoxysilane, 3-aminopropyltriethoxysilane, 3-glycidoxypropyltrimethoxysilane, 3-glycidoxypropylmethyldimethoxysilane, 2-(3,4 epoxycyclohexyl)ethyltrimethoxysilane, vinyltriethoxysilane, 3-mercaptopropyltrimethoxysilane, and 3-methacryloxypropyltrimethoxysilane. The silane coupling agent (B2) can contain a commercially available product.

The silane coupling agent (B2) preferably has a functional group having reactivity with the resin component (A2). The type of the reaction of the silane coupling agent (B2) and the resin component (A2) in this case may be a polymerization reaction, a condensation reaction, an addition reaction, or the like, and is not particularly limited. The silane coupling agent (B2) preferably contains at least one selected from the group consisting of 3-aminopropyltriethoxysilane, 3-glycidoxypropyltrimethoxysilane, and 3-mercaptopropyltrimethoxysilane, particularly contains at least one of 3-aminopropyltriethoxysilane or 3-glycidoxypropyltrimethoxysilane.

The phosphorus compound (C1) in the protective layer is reacted with a metal component contained in the plated layer, whereby a layer including a reaction product of the phosphorus compound (C1) and the metal component contained in the plated layer is formed at the interface between the plated layer and the protective layer. Thus, corrosion resistance and coating film adhesiveness of the coated plated steel sheet can be enhanced.

Each of the phosphorus compound (C1) in the protective layer and the phosphorus compound (C2) in the aqueous surface treatment agent contains, for example, a phosphoric acid component. The phosphoric acid component contains at least one selected from the group consisting of, for example, an inorganic phosphoric acid such as phosphoric acid and an inorganic phosphoric acid compound such as ammonium phosphate, potassium phosphate, sodium phosphate, or monosodium dihydrogen phosphate. The phosphoric acid component preferably contains at least one of an inorganic phosphoric acid compound or an inorganic phosphoric acid, more preferably contains phosphoric acid.

The cobalt compound (D1) in the protective layer can effectively inhibit the coated plated steel sheet from being changed in color, in particular, blackened. In particular, the cobalt compound (D1) in the protective layer can enhance corrosion resistance of the coated plated steel sheet under high-temperature/high humidity conditions.

Each of the cobalt compound (D2) in the aqueous surface treatment agent and the cobalt compound (D1) in the protective layer contains at least one selected from the group consisting of, for example, a sulfuric acid salt of cobalt, a hydrochloric acid salt of cobalt, a carbonic acid salt of cobalt, a phosphoric acid of cobalt, an acetic acid salt of cobalt, and a nitric acid salt of cobalt. More specifically, each of the cobalt compound (D2) and the cobalt compound (D1) contains at least one selected from the group consisting of, for example, cobalt (II) nitrate, cobalt sulfate (II), cobalt (II) chloride, cobalt (II) carbonate, cobalt (II) phosphate, cobalt acetylacetonate, cobalt ethylenediaminetetraacetate, cobalt (II) acetate, cobalt (II) oxalate, cobalt (III) oxalate, cobalt (III) oxide, and cobalt (IV) oxide.

Each of the cobalt compound (D2) and the cobalt compound (D1) preferably contains, in particular, at least one selected from the group consisting of a sulfuric acid salt of cobalt, a hydrochloric acid salt of cobalt, and a nitric acid salt of cobalt. Each of the cobalt compound (D2) and the cobalt compound (D1) further preferably contains cobalt (II) nitrate.

The titanium compound (E1) in the protective layer can enhance corrosion resistance of the protective layer. The aqueous surface treatment agent contains at least one selected from the group consisting of, for example, a chelate compound of titanium, titanium hydrofluorate, and ammonium fluorotitanate, as the titanium compound (E2).

The titanium compound (E2) preferably contains a chelate compound of titanium. In this case, whitening due to dew condensation or the like, of the protective layer, due to fluorine freed from the titanium compound (E2) can be suppressed.

The vanadium compound (F1) in the protective layer can enhance corrosion resistance of the protective layer. The vanadium compound (F1) is, for example, an oxide or an acetylacetone complex of vanadium.

The aqueous surface treatment agent contains at least one selected from the group consisting of, for example, vanadium pentoxide, metavanadic acid and a salt thereof (for example, ammonium metavanadate), vanadium trioxide, vanadium dioxide, vanadium oxyacetylacetonate, and vanadium acetylacetonate, in which a strong electrolyte is not included, as well as vanadium acetate which is a salt with volatile acid, as the vanadium compound (F2). In particular, in a case in which the vanadium compound (F2) contains an acetylacetone complex of vanadium, such as vanadium acetylacetonate or vanadium oxyacetylacetonate, corrosion resistance of the protective layer can be more enhanced.

The aqueous surface treatment agent may further contain an acetic acid component (G). The acetic acid component (G) is a component including at least one of acetic acid or an acetic acid salt. The acetic acid component (G) can enhance storage stability of the aqueous surface treatment agent. It is presumed that the reason is because the pH buffer action of the acetic acid component (G) allows the pH of the aqueous surface treatment agent to be stabilized at about 3.5 to 4.0 and can inhibit a condensation reaction of the silane coupling agent (B2) in the aqueous surface treatment agent from progressing. According to studies by the inventors, the condensation reaction of the silane coupling agent (B2) most slowly progresses in a case in which the pH of the aqueous surface treatment agent is from about 3.5 to 4.0.

The acetic acid component (G) contains at least one selected from the group consisting of, for example, acetic acid, ammonium acetate, potassium acetate, and sodium acetate. The acetic acid component (G) preferably contains acetic acid. In this case, the boiling point of acetic acid is 118°C and is low among organic acids having buffer action, and therefore acetic acid hardly remains during production of the protective layer by drying of the aqueous surface treatment agent.

The aqueous surface treatment agent may contain olefin-based wax (H). In this case, the coated plated steel sheet, which is wound in a coiled manner, is hardly deformed due to loosening, and the coated plated steel sheet, which is plied, hardly collapses.

The olefin-based wax (H) is preferably surface-modified with a silane coupling agent (I). In this case, the olefin-based wax (H) can be favorably dispersed in the protective layer. The olefin-based wax (H) contains at least one selected from the group consisting of, for example, polyethylene wax, oxidized polyethylene wax, and oxidized polypropylene wax. Examples of the olefin-based wax (H) that is surface-modified with the silane coupling agent (I) include surface-modified olefin-based wax obtained by directly mixing an epoxy group-containing silane coupling agent (for example, glycidylpropyltrimethoxysilane) with a polyethylene wax emulsion having a carboxyl group stable in an acidic treatment liquid. The ratio of the mass of the silane coupling agent (I) with respect to the mass of the olefin-based wax (H) is preferably from 0.025 to 0.035. The amount of the silane coupling agent (I) added is preferably equimolar to or more than that corresponding to the acid value of the wax dispersion.

The average particle size of the olefin-based wax (H) is preferably from 0.05 µm to 0.15 µm. In a case in which the wax particle size is 0.15 µm or less, the volume of wax present in a coating film surface decreases and handleability is enhanced, and in a case in which the wax particle size is 0.05 µm or more, not only processability is enhanced, but also an adverse influence on stability of the treatment agent due to wax aggregation is small. It is noted that a value measured by a laser diffraction/scattering method is here used as the average particle size of the olefin-based wax (H).

The aqueous surface treatment agent can contain an aqueous solvent. The aqueous solvent is water, or a mixed solvent including water and a water-soluble organic solvent. The water-soluble organic solvent is, for example, an alcohol. The proportion of the water-soluble organic solvent with respect to the entire aqueous solvent is preferably 30% by mass or less.

The aqueous surface treatment agent may contain any appropriate additive such as a leveling agent or a defoamer.

The aqueous surface treatment agent preferably does not contain colloidal silica. In this case, it is possible to prevent stability of the aqueous surface treatment agent from deteriorating due to a reaction of the silane coupling agent (B2) and colloidal silica.

The aqueous surface treatment agent preferably does not contain a basic alkali silicic acid salt. In this case, favorable stability of the aqueous surface treatment agent can be kept.

Each of the aqueous surface treatment agent and the protective layer may contain at least one of chromium or a chromium compound, and preferably contains neither chromium, nor a chromium compound. In a case in which the aqueous surface treatment agent contains at least one of chromium or a chromium compound, such chromium or chromium compound is preferably contained only as an inevitable impurity.

The proportion of each component compounded in the protective layer and the aqueous surface treatment agent is described. The solid content of the aqueous surface treatment agent, described below, is the total of components in the aqueous surface treatment agent, except for components volatilizing in the course of production of the protective layer, specifically, a solvent, a volatile acid, and the like.

Each of the mass ratio of the resin (A1) with respect to the protective layer and the mass ratio of the resin component (A2) with respect to the solid content of the aqueous surface treatment agent is 0.60 or more. In this case, the action of an enhancement in corrosion resistance and an enhancement in blackening resistance under a normal environment with the protective layer is obtained. The mass ratio is preferably 0.65 or more, more preferably 0.70 or more. Each of the mass ratio of the resin (A1) with respect to the protective layer and the mass ratio of the solid content of the aqueous surface treatment agent with respect to the resin component (A2) is, for example, 0.85 or less. In this case, the action of an enhancement in corrosion resistance and an enhancement in blackening resistance with the protective layer cannot be saturated.

The ratio of the mass of a silicon atom (Si) in terms of SiO₂ in the protective layer with respect to the total mass of the protective layer is from 0.07 to 0.19. In other words, each of the mass ratio in terms of SiO₂ of the silicon compound (B1) with respect to the protective layer and the mass ratio in terms of SiO₂ of the silane coupling agent (B2) with respect to the solid content of the aqueous surface treatment agent is preferably from 0.07 to 0.19. In this case, the action of an enhancement in corrosion resistance and an enhancement in blackening resistance with the protective layer is obtained. The mass ratio in terms of SiO₂ of a silicon atom in the protective layer with respect to the total mass of the protective layer is preferably 0.1 or more, more preferably 0.12 or more. The mass ratio is preferably 0.18 or less, more preferably 0.16 or less.

The mass ratio of a phosphorus atom (P) in the protective layer with respect to the total mass of the protective layer is from 0.011 to 0.075. In other words, each of the mass ratio in terms of P of the phosphorus compound (C1) with respect to the protective layer and the mass ratio in terms of P of the phosphorus compound (C2) with respect to the solid content of the aqueous surface treatment agent is preferably from 0.011 to 0.075. In a case in which the mass ratio is 0.011 or more, the aqueous surface treatment agent can have higher stability. In a case in which the mass ratio is 0.075 or less, deterioration in water resistance due to excess addition can be suppressed. The mass ratio is preferably 0.015 or more, more preferably 0.025 or more. The mass ratio is more preferably 0.070 or less.

The ratio of the mass of a cobalt atom (Co) in the protective layer with respect to the total mass of the protective layer is from 0.0015 to 0.0200. In other words, each of the mass ratio in terms of Co of the cobalt compound (D1) with respect to the protective layer and the mass ratio in terms of Co of the cobalt compound (D2) with respect to the solid content of the aqueous surface treatment agent is preferably from 0.0015 to 0.0200. In a case in which the mass ratio of a cobalt atom (Co) in the protective layer with respect to the total mass of the protective layer is 0.0015 or more, blackening resistance under high-temperature and high-humidity conditions can be more enhanced, and in a case in which the mass ratio is 0.02 or less, adhesiveness of the protective layer can be more enhanced. The mass ratio is preferably 0.0030 or more, more preferably 0.0050 or more. The mass ratio is preferably 0.0150 or less, more preferably 0.0100 or less.

The mass ratio of a titanium atom (Ti) in the protective layer with respect to the total mass of the protective layer is, for example, from 0.005 to 0.0240. In other words, each of the mass ratio in terms of Ti of the titanium compound (E1) with respect to the protective layer and the mass ratio in terms of Ti of the titanium compound (E2) with respect to the solid content of the aqueous surface treatment agent is, for example, from 0.0050 to 0.0240. In a case in which the mass ratio is 0.0050 or more, corrosion resistance can be more enhanced, and in a case in which the mass ratio is 0.240 or less, adhesiveness of the protective layer can be more enhanced. The mass ratio may be 0.0070 or more. The mass ratio may be 0.0230 or less.

The mass ratio of a vanadium atom (V) in the protective layer with respect to the total mass of the protective layer is, for example, from 0.0003 to 0.0090. In other words, each of the mass ratio in terms of V of the vanadium compound (F1) with respect to the protective layer and the mass ratio in terms of V of the vanadium compound (F2) with respect to the solid content of the aqueous surface treatment agent is, for example, from 0.0030 to 0.0090. In a case in which the mass ratio is 0.0030 or more, corrosion resistance can be more enhanced, and in a case in which the mass ratio is 0.0090 or less, adhesiveness of the protective layer can be more enhanced. The mass ratio may be 0.004 or more.

The atomic concentration ratio of the atomic concentration of cobalt and the atomic concentration of silicon in the protective layer is described here.

The atomic concentration ratio (Atomic concentration of cobalt/Atomic concentration of silicon) of the atomic concentration of cobalt and the atomic concentration of silicon in the protective layer is preferably from 0.01 to 0.38.

Herein, the "atomic concentration ratio of the atomic concentration of cobalt and the atomic concentration of silicon" is also referred to as "ratio of Co/Si".

The ratio of Co/Si in the protective layer is preferably 0.01 or more because blackening can be suppressed by the effect of Co. The ratio of Co/Si in the protective layer is more preferably 0.10 or more.

The ratio of Co/Si in the protective layer is preferably 0.38 or less because corrosion resistance can be sufficiently ensured. The ratio of Co/Si in the protective layer is more preferably 0.20 or less.

The ratio of Co/Si in the protective layer can be adjusted by the ratio of the silicon compound (B1) and the cobalt compound (D1) in an aqueous surface treatment liquid for formation of the protective layer.

The method of measuring the ratio of Co/Si in the protective layer is described in Examples below.

The atomic concentration ratio of the atomic concentration of cobalt and the atomic concentration of silicon (Atomic concentration of cobalt/Atomic concentration of silicon) at a position of a depth of 10 nm from the interface between the plated layer and the protective layer is preferably from 1.15 times to 2.50 times the atomic concentration ratio of the atomic concentration of cobalt and the atomic concentration of silicon (Atomic concentration of cobalt/Atomic concentration of silicon) at a position of a depth of 60 nm from the interface between the plated layer and the protective layer, in a region of the protective layer, in which the region is in contact with the MgZn₂ phase included in the plated layer.

The "factor of the atomic concentration ratio of the atomic concentration of cobalt and the atomic concentration of silicon at a position of a depth of 10 nm from the interface between the plated layer and the protective layer with respect to the atomic concentration ratio of the atomic concentration of cobalt and the atomic concentration of silicon at a position of a depth of 60 nm from the interface between the plated layer and the protective layer in a region of the protective layer, in which the region is in contact with the MgZn₂ phase included in the plated layer is also referred to as "Co concentrating factor of the protective layer on the MgZn₂ phase".

It is noted that, in a case in which the protective layer does not contain cobalt, the concentrating factor is absent.

The "in a region of the protective layer, in which the region is in contact with the MgZn₂ phase included in the plated layer" means one portion of the protective layer, in which the portion is inside from a portion where the protective layer is in contact with the MgZn₂ phase, in parallel with the thickness direction of the protective layer. In other words, the "in the region" means a region of the protective layer, in which the region is overlapped with the MgZn₂ phase in contact with the protective layer, when viewed from the thickness direction of the protective layer.

Cobalt is effective for an enhancement in blackening resistance of the plated layer containing aluminum, zinc, and magnesium. However, in a case in which cobalt is excessively contained in the protective layer, corrosion resistance deteriorates. It is said that the blackening mechanism of the plated layer containing aluminum, zinc, and magnesium is caused by formation of oxygen-deficient ZnO (ZnOi-s: black) on the outermost layer in the plated layer. The inventors have made detailed studies about the blackening mechanism of the plated layer containing aluminum, zinc, and magnesium, and have obtained the following findings.

The plated layer containing aluminum, zinc, and magnesium includes respective phases such as a MgZn₂ phase, a Zn phase, and an Al phase. In a case in which the plated layer includes a MgZn₂ phase, at least one portion of the MgZn₂ phase is exposed on a surface of the plated layer and is in contact with the protective layer. The MgZn₂ phase has been found to be most easily blackened in the plated layer. Cobalt is then concentrated in a region of the protective layer, in which the region is in contact with the MgZn₂ phase, whereby blackening of the MgZn₂ phase can be suppressed and blackening resistance can be effectively enhanced without deterioration of corrosion resistance.

Accordingly, the Co concentrating factor of the protective layer on the MgZn₂ phase is preferably from 1.15 times to 2.50 times. The Co concentrating factor of the protective layer on the MgZn₂ phase is more preferably from 1.20 times to 2.00 times, still more preferably from 1.20 times to 1.50 times.

In other words, a preferred lower limit value of the Co concentrating factor of the protective layer on the MgZn₂ phase is preferably 1.20 times.

A preferred upper limit of the Co concentrating factor of the protective layer on the MgZn₂ phase is more preferably 2.00 times, still more preferably 1.50 times.

In order that the Co concentrating factor of the protective layer on the MgZn₂ phase is in the above range, a time equal to or more than a certain time is preferably ensured in formation of the protective layer, as the time from application of the aqueous surface treatment agent onto the plated layer to baking and drying of an applied film (treatment liquid retention time). Thus, the time taken for allowing the aqueous surface treatment agent in a liquid state to be in contact with the plated layer is elongated.

Cobalt is a potentially noble metal, and therefore a cobalt ion can be concentrated on the MgZn₂ phase in the plated layer, in which the MgZn₂ phase is potentially base. Therefore, the Co concentrating factor of the protective layer on the MgZn₂ phase can be enhanced.

It is noted that cobalt in the protective layer cannot be concentrated on the MgZn₂ phase because a film applied is usually baked and dried immediately after application of the aqueous surface treatment agent.

The method of measuring the Co concentrating factor of the protective layer on the MgZn₂ phase is described in Examples below.

The aqueous surface treatment agent can be prepared by mixing components of the aqueous surface treatment agent.

The coated plated steel sheet can be produced by producing the protective layer from the aqueous surface treatment agent, on a plated layer of a plated steel sheet including a steel sheet and the plated layer.

It is preferable to apply treatment for application of a compression pressure onto a surface of the plated layer in the plated steel sheet before production of the protective layer. Examples of the treatment include treatment for application of a compression pressure onto a surface of the plated layer with a skin pass mill, a tension leveler, or the like.

Before production of the protective layer on the plated layer, washing with pure water or various organic solvent liquids, washing with an aqueous solution arbitrarily containing an acid, various etching agents, and the like, or various organic solvent liquids, or the like may be applied as substrate treatment of a surface of the plated layer. In a case in which a surface of the plated layer is thus washed and even in a case in which a small amount of a Mg-based oxidized film is present in a surface layer of the plated layer or inorganic and organic grime or the like is attached on a surface of the plated layer, such Mg-based oxidized film, grime, and the like are removed from the plated layer and thus adhesiveness between the plated layer and the protective layer can be improved.

The protective layer can be produced by applying the aqueous surface treatment agent on a surface of the plated layer in the plated steel sheet and drying the resultant. Thus, the coated plated steel sheet can be produced.

The method of coating with the aqueous surface treatment agent is, for example, dipping method, a spraying method, or a roll-coating method, but not limited thereto.

The heating temperature for drying the aqueous surface treatment agent is selected so that volatile components (for example, solvent and volatile acid) in an aqueous surface treatment material are volatilized. The aqueous surface treatment agent is preferably heated and dried so that the maximum achieving plate temperature (PMT) of the plated steel sheet falls within a range of from 60 to 150°C. The aqueous surface treatment agent can be dried by hot air drying or drying in a furnace.

The amount of attachment of the protective layer is, for example, 100 mg/m² or more. In a case in which painting is not applied on the protective layer, the amount of attachment of the protective layer is preferably 300 mg/m² or more. The amount of attachment of the protective layer is, for example, 3000 mg/m² or less. In a case in which spot welding is applied to the coated plated steel sheet, the amount of attachment of the protective layer is preferably 1500 mg/m² or less. The thickness of the protective layer is, for example, from 0.1 µm to 5.0 µm.

### [Coating Film Layer]

A coated plated steel sheet according to an embodiment may include a coating film layer. In other words, the coated plated steel sheet may further include a coating film layer covering the protective layer. The coating film layer can be formed from paint, the aqueous surface treatment agent, a film, or the like, or may be formed from only paint or only a film, or formed by combining and stacking a layer formed from paint and a layer formed from a film. In other words, the coated plated steel sheet may have at least one or more coating film layers. The thickness of the coating film layer is preferably 0.1 µm. In this case, corrosion resistance of the coated plated steel sheet is improved. The thickness of the coating film layer is preferably 2.0 mm or less from the viewpoint of economic performance.

A coating film layer formed from paint, a film, and the like can be formed by an appropriate method.

In a case in which the coating film layer is formed from paint, the paint used here is, for example, polyester resin-based paint, epoxy resin-based paint, acrylic resin-based paint, fluororesin-based paint, silicone resin-based paint, amino resin-based paint, urethane resin-based paint, vinyl chloride resin-based paint, or any composite paint as a composite of such paint.

The method of painting the paint, adopted here, can be an appropriate method such as a roll coating method, a curtain coating method, a spray method, a dipping method, an electrolytic treatment method, or an air knife method. After application of the paint, drying, baking, or the like by ordinary temperature drying or a heating apparatus is applied, whereby a coating film layer is formed. In a case in which energy line-curable paint is used, a coating film layer may be formed by irradiating the paint after painting with an energy line such as infrared light, ultraviolet light, or electron beam, and thus curing the paint. The temperature and the drying time during drying of the paint are appropriately determined depending on the type or the like of the paint used. The coating film layer is a continuous or non-continuous coating film.

In a case in which the coating film layer is formed with the paint, a basecoat coating film layer and an overcoat coating film layer may be formed on the protective layer. In a case in which the basecoat coating film layer is formed, for example, epoxy resin-based paint is used. In a case in which the overcoat coating film layer is formed, for example, polyester-based paint is used. A coated plated steel sheet having such an overcoat coating film layer and a basecoat coating film layer can be suitably used as an outdoor building material. The thickness of a basecoat protective layer is preferably from 1.0 µm to 10.0 µm, and the thickness of an overcoat protective layer is preferably from 5.0 µm to 50.0 µm.

In a case in which the coating film layer is formed from a film, examples of the film include a vinyl chloride-based film, a polyester resin-based film, an acrylic resin-based film, a fluororesin-based film, a composite film as a composite of these resins, or a stacked film in which these films are stacked. Such a film is, for example, heat-sealed, or bonded by an adhesive, on the protective layer or the like, whereby a coating film layer is formed.

In a case in which the coating film layer is formed from the film, the thickness is preferably from 1.0 µm to 2.0 mm. A coated plated steel sheet having the coating film layer can be suitably used in an outdoor building material application.

The coating film layer may be produced from clear paint. In this case, the plated layer is visible from the outside through the coating film layer and blackening resistance of the plated layer can be enhanced, and therefore the appearance of the coated plated steel sheet can be inhibited from deteriorating.

A coated plated steel sheet according to an embodiment does not optionally include the coating film layer, and an outermost layer of the coated plated steel sheet may be the protective layer. Also in this case, blackening resistance of the plated layer can be enhanced, and therefore the appearance of the coated plated steel sheet can be inhibited from deteriorating.

### EXAMPLES

Hereinafter, specific Examples of the embodiment are presented. It is noted that the embodiment is not limited to only the following Examples.

### 1. Preparation of Plated Steel Sheet

A long steel sheet 1 (low-carbon aluminum-killed steel) having a thickness of 0.8 mm and a width of 1000 mm was used. Plating processing was applied to the steel sheet 1 with a plating treatment apparatus illustrated in FIG. 1.

The bath temperature during the plating treatment performed was shown in Table 1 to Table 4.

The temperature at the time of entry of the steel sheet 1 into a plating bath 2 was set to 530°C. The values were shown in Table 1 to Table 4.

The steel sheet 1, when drawn from the plating bath 2, was drawn in an air atmosphere. Furthermore, gas wiping was applied in an air atmosphere to the steel sheet 1 drawn in an air atmosphere.

The steel sheet 1 was cooled in a cooling apparatus 10 until the surface temperature of the plated metal reached 300°C. The cooling rate of the plated metal from 500°C to 400°C was shown in Table 1 to Table 4.

### 2-1. Atomic Concentrations of Metals in Outermost Layer at Depth of 5 nm in Plated Layer

The respective average values of the atomic concentrations of aluminum, zinc, and magnesium up to a depth of 5 nm in the plated layer of each of the plated steel sheets described in Table 1 to Table 4 were measured with X-ray photoelectron spectroscopy. In this measurement, model number VERSAPROBEIII manufactured by Ulvac PHI was used. The measurement was performed according to the following conditions.

### <Measurement Conditions>

X-ray source: mono-Al Kα (hv: 1486.6 eV)
X-ray diameter: about 200 µmφ
Capturing angle 45°
Sputtering condition: Ar+
Accelerating voltage 1 kv
Rate of sputtering: 2 nm/min

The respective average values of the atomic concentrations of aluminum, zinc, and magnesium present up to a depth of 5 nm in the plated layer were calculated as follows.

First, a specimen is obtained from the plated steel sheet as follows. The plated steel sheet as a subject was cut so as to have a size of 20 mm × 20 mm, to prepare an analysis specimen. In a case in which a measurement subject is a coated plated steel sheet, a protective layer is removed by sputtering in the depth direction, from the coated plated steel sheet, and analysis of an outermost layer of the plated layer is carried out.

While a region from a surface of the plated layer of the resulting specimen to a depth of 5 nm is sputtered, the atomic concentration of each metal in the region is measured. The atomic concentration of each of aluminum, zinc, and magnesium in an outermost layer at a depth of 5 nm in the plated layer was measured.

This operation is carried out for three specimens arbitrarily collected from the plated steel sheet. The total value of the atomic concentration of each of aluminum, zinc, and magnesium in the outermost layer at a depth of 5 nm in the plated layer obtained is subjected to arithmetic averaging. The arithmetic average value was defined as the average value of the atomic concentration of each of metals in the outermost layer at a depth of 5 nm in the plated layer, and shown in Table 1 to Table 4. The unit is an atomic percentage (% by atom).

The average value of the atomic concentration of aluminum with respect to the total of the atomic concentration of magnesium and the atomic concentration of zinc was calculated from the average value of the atomic concentration of each of metals, obtained above. The values were shown in Tables 1 to 4.

The respective average values of the atomic concentrations of the metals in the above measurement were obtained by confirming respective peak intensities Al2p, Zn2p3, and Mg1s.

### 2-2. Proportion of Metal in Plated Layer

The proportion of each of the aluminum, the zinc, and the magnesium in the plated layer with respect to each of the plated steel sheets described in Table 1 to Table 4 was measured by RF-inductively coupled plasma emission spectrometry (ICP). Specifically, a sample having a size of 50 mm × 50 mm was cut out from each of the plated steel sheets, and an edge surface and a rear surface were sealed by refinish paint, thereby preparing a sample for plating component measurement. The plated layer on a surface of the sample was dissolved in an acidic solution, thereby performing peeling together with a protective coating film. After the solution used for peeling was made to a constant volume of 100 mL, the absolute amount of each of aluminum, magnesium, and zinc contained in the solution was measured by ICP mass spectrometry (ICP analysis apparatus used: AGILENT 8900 model manufactured by Agilent Technologies). The proportion of each of such metals was determined from the absolute amount of each of such metals.

**[Table 1]**

| Plated steel sheet No. | | | No. 1 | No. 2 | No. 3 | No. 4 | No. 5 | No. 6 | No. 7 | No. 8 | No. 9 | No. 10 |
|---|---|---|---|---|---|---|---|---|---|---|---|---|
| Content of element | Zn | % by mass | Balance | Balance | Balance | Balance | Balance | Balance | Balance | Balanc e | Balanc e | Balanc e |
| | Al | % by mass | 54.5 | 53.2 | 55.1 | 52.4 | 56.4 | 56.8 | 55.2 | 53.6 | 53.1 | 50.2 |
| | Mg | % by mass | 2.2 | 2.2 | 2.3 | 2.2 | 2.1 | 2.4 | 2.1 | 2.5 | 2.1 | 2.1 |
| | Si | % by mass | 1.6 | 1.8 | 1.6 | 1.7 | 1.5 | 1.7 | 1.5 | 1.4 | 1.5 | 1.8 |
| | Cr | % by mass | 0.1 | 0.1 | 0.1 | 0.1 | 0.1 | 0 | 0 | 0 | 0 | 0.1 |
| | Ca | ppm | 145 | 70 | 285 | 39 | 310 | 92 | 130 | 192 | 235 | 201 |
| | Sr | ppm | 10 | 8 | 10 | 6 | 11 | 6 | 5 | 6 | 6 | 7 |
| Plating bath temperature | | °C | 600 | 600 | 600 | 600 | 600 | 600 | 600 | 600 | 600 | 545 |
| Temperature in entry of steel sheet into plating bath | | °C | 530 | 530 | 530 | 530 | 530 | 530 | 530 | 530 | 530 | 530 |
| Cooling rate until attainment to 400°C from 500°C | | °C/min | 20 | 20 | 20 | 20 | 20 | 20 | 20 | 20 | 20 | 20 |
| Atomic concentration in outermost layer at 5-nm depth in plated layer | Zn | % by atom | 3.1 | 4.1 | 3.9 | 2.2 | 5.9 | 5.5 | 4.3 | 3.6 | 2.8 | 3.5 |
| | Al | % by atom | 46 | 29.7 | 59.3 | 26.8 | 61.3 | 34.3 | 38.1 | 50.8 | 56.5 | 60.5 |
| | Mg | % by atom | 50.9 | 66.2 | 36.8 | 71 | 32.8 | 60.2 | 57.6 | 45.6 | 40.7 | 36 |
| | Al/(Zn+M g) | - | 0.85 | 0.42 | 1.46 | 0.37 | 1.58 | 0.52 | 0.62 | 1.03 | 1.30 | 1.53 |

**[Table 2]**

| Plated steel sheet No. | | | No. 11 | No. 12 | No. 13 | No. 14 | No. 15 | No. 16 | No. 17 | No. 18 | No. 19 | No. 20 |
|---|---|---|---|---|---|---|---|---|---|---|---|---|
| Content of element | Zn | % by mass | Balanc e | Balanc e | Balanc e | Balanc e | Balanc e | Balanc e | Balanc e | Balanc e | Balanc e | Balanc e |
| | Al | % by mass | 49.7 | 49.9 | 54.5 | 54.9 | 56.3 | 55.1 | 54.1 | 54.4 | 55.2 | 40.2 |
| | Mg | % by mass | 2.2 | 2.4 | 2.4 | 2.3 | 2.4 | 2.3 | 2.4 | 2.2 | 2 | 2.2 |
| | Si | % by mass | 1.3 | 1.6 | 1.9 | 1.6 | 1.5 | 1.6 | 1.6 | 1.4 | 1.8 | 1.5 |
| | Cr | % by mass | 0.1 | 0.1 | 0.1 | 0.1 | 0.1 | 0.1 | 0.1 | 0.1 | 0.1 | 0.1 |
| | Ca | ppm | 202 | 206 | 92 | 97 | 89 | 94 | 93 | 92 | 89 | 88 |
| | Sr | ppm | 7 | 6 | 5 | 9 | 6 | 10 | 7 | 8 | 11 | 9 |
| Plating bath temperature | | °C | 575 | 590 | 625 | 650 | 680 | 600 | 600 | 600 | 600 | 600 |
| Temperature in entry of steel sheet into plating bath | | °C | 530 | 530 | 530 | 530 | 530 | 530 | 530 | 530 | 530 | 530 |
| Cooling rate until attainment to 400°C from 500°C | | °C/min | 20 | 20 | 20 | 20 | 20 | 5 | 10 | 30 | 50 | 20 |
| Atomic concentration in outermost layer at 5-nm depth in plated layer | Zn | % by atom | 5.6 | 4.5 | 4.5 | 3.8 | 2.9 | 12.3 | 8.3 | 2.2 | 1.2 | 6.2 |
| | Al | % by atom | 55.2 | 54.6 | 34.6 | 32.9 | 26.1 | 24.5 | 31.6 | 34.5 | 34.6 | 21.5 |
| | Mg | % by atom | 39.2 | 40.9 | 60.9 | 63.3 | 71 | 63.2 | 60.1 | 63.3 | 64.2 | 72.3 |
| | Al/(Zn+M g) | - | 1.23 | 1.20 | 0.53 | 0.49 | 0.35 | 0.32 | 0.46 | 0.53 | 0.53 | 0.27 |

**[Table 3]**

| Plated steel sheet No. | | | No. 21 | No. 22 | No. 23 | No. 24 | No. 25 | No. 26 | No. 27 | No. 28 | No. 29 | No. 30 |
|---|---|---|---|---|---|---|---|---|---|---|---|---|
| Content of element | Zn | % by mass | Balanc e | Balanc e | Balanc e | Balanc e | Balanc e | Balanc e | Balanc e | Balanc e | Balanc e | Balanc e |
| | Al | % by mass | 46.2 | 51.2 | 58.2 | 66.2 | 55.2 | 52.1 | 53.4 | 54.1 | 53.3 | 53.2 |
| | Mg | % by mass | 2.6 | 2.4 | 2.4 | 2.1 | 0 | 0.4 | 1.5 | 2.7 | 3.6 | 5.2 |
| | Si | % by mass | 1.4 | 1.7 | 1.4 | 1.7 | 1.9 | 1.6 | 1.6 | 1.6 | 1.7 | 1.8 |
| | Cr | % by mass | 0.1 | 0.1 | 0.1 | 0.1 | 0 | 0.1 | 0.1 | 0.1 | 0.1 | 0.1 |
| | Ca | ppm | 92 | 92 | 196 | 199 | 0 | 192 | 201 | 202 | 93 | 94 |
| | Sr | ppm | 6 | 8 | 9 | 8 | 0 | 9 | 6 | 8 | 9 | 9 |
| Plating bath temperature | | °C | 600 | 600 | 630 | 630 | 600 | 600 | 600 | 600 | 600 | 600 |
| Temperature in entry of steel sheet into plating bath | | °C | 530 | 530 | 530 | 530 | 530 | 530 | 530 | 530 | 530 | 530 |
| Cooling rate until attainment to 400°C from 500°C | | °C/min | 20 | 20 | 20 | 20 | 20 | 20 | 20 | 20 | 20 | 20 |
| Atomic concentration in outermost layer at 5-nm | Zn | % by atom | 7.8 | 4.1 | 3.3 | 1.1 | 9.9 | 6.8 | 5.8 | 4.5 | 3.3 | 2.1 |
| depth in plated layer | Al | % by atom | 27.8 | 30.4 | 58.5 | 64.1 | 90.1 | 66.6 | 57.1 | 54.9 | 31.6 | 26.7 |
| | Mg | % by atom | 64.4 | 65.5 | 38.2 | 30.1 | 0 | 26.6 | 37.1 | 40.6 | 65.1 | 71.2 |
| | Al/(Zn+M g) | - | 0.39 | 0.44 | 1.41 | 2.05 | 9.10 | 1.99 | 1.33 | 1.22 | 0.46 | 0.36 |

**[Table 4]**

| Plated steel sheet No. | | | No. 31 | No. 32 | No. 33 | No. 34 | No. 35 | No. 36 | No. 37 |
|---|---|---|---|---|---|---|---|---|---|
| Element contained | Zn | % by mass | Balance | Balance | Balance | Balance | Balance | Balance | Balance |
| | Al | % by mass | 38.2 | 24.5 | 19.2 | 10.9 | 11.0 | 6.2 | 5.0 |
| | Mg | % by mass | 5.1 | 2.2 | 6.0 | 5.0 | 3.1 | 3.0 | 0.1 |
| | Si | % by mass | 0.2 | 0.2 | 0.2 | 0.2 | 0.2 | 0.1 | 0.1 |
| | Ca | ppm | 856 | 749 | 810 | 812 | 546 | 542 | 548 |
| Plating bath temperature | | °C | 600 | 580 | 540 | 500 | 500 | 450 | 450 |
| Temperature in entry of steel sheet into plating bath | | °C | 530 | 530 | 530 | 530 | 530 | 530 | 530 |
| Cooling rate until attainment to 400°C from 500°C | | °C/min | 20 | 20 | 20 | 20 | 20 | 20 | 20 |
| Atomic concentration in outermost layer at 5-nm depth in plated layer | Zn | % by atom | 26.3 | 32.1 | 30.0 | 39.2 | 8.4 | 15.2 | 77.2 |
| | Al | % by atom | 55.2 | 50.7 | 47.5 | 43.2 | 44.1 | 32.1 | 20.5 |
| | Mg | % by atom | 18.5 | 17.2 | 22.5 | 17.6 | 47.5 | 52.7 | 2.3 |
| | Al/(Zn+Mg) | - | 1.23 | 1.03 | 0.90 | 0.76 | 0.79 | 0.47 | 0.26 |

### 3. Aqueous Surface Treatment Agent

An aqueous surface treatment agent was prepared so that a composition described in Table 5 to Table 8 was achieved. Raw materials used in preparation of the aqueous surface treatment agent are described below. The composition of a protective layer formed with the aqueous surface treatment agent was matched with the composition of the solid content of the aqueous surface treatment agent.
- Cationic urethane resin: polycarbonate-based cationic polyurethane resin. product name: SUPERFLEX 650 manufactured by DKS Co., Ltd.
- Cationic phenol resin: cationic phenol resin having a repeating unit of Formula (2), in which the average degree of polymerization of the repeating unit is 5, and, in Formula (2), Y₁ is - CH₂N(CH₃)₂, Y₂ is H, and the number of substituents per benzene ring is 0.5.
- Cationic acrylic resin: product name ACE-6 manufactured by MURAYAMA CHEMICAL LABORATORY CO., LTD.
- Anionic urethane resin: HUX-380 manufactured by ADEKA CORPORATION.
- Nonionic urethane resin: HUX830 manufactured by ADEKA CORPORATION.
- Nonionic epoxy resin: EM-0465 manufactured by ADEKA CORPORATION.
- Nonionic phenol resin: TD-4305 manufactured by DIC CORPORATION, solid content 40% by mass.
- Nonionic acrylic resin: SUN ACRYLIC NO 60 manufactured by MURAYAMA CHEMICAL LABORATORY CO., LTD., amount of solid content 32% by mass
- Silane coupling agent #1: 3-aminopropyltriethoxysilane.
- Silane coupling agent #2: 3-glycidoxypropyltrimethoxysilane.
- Phosphorus compound: phosphoric acid.
- Cobalt compound: cobalt (II) nitrate hexahydrate.
- Titanium compound: titanium diisopropoxybisacetylacetonate
- Vanadium compound: vanadium acetylacetonate

**[Table 5]**

| Treatment agent No. | | | No. 1 | No. 2 | No. 3 | No. 4 | No. 5 | No. 6 | No. 7 | No. 8 | No. 9 |
|---|---|---|---|---|---|---|---|---|---|---|---|
| Composition (mass ratio with respect to solid content) | Cationic resin | Cationic urethane resin | 0.15 | 0.15 | 0.15 | 0.15 | 0.15 | 0.15 | 0.15 | 0.15 | 0.15 |
| | | Cationic phenol resin | 0.02 | | 0.02 | | 0.02 | 0.02 | 0.03 | 0.02 | 0.02 |
| | | Cationic resin acrylic resin | 0.55 | 0.47 | 0.55 | 0.51 | 0.58 | 0.45 | 0.56 | 0.45 | 0.52 |
| | | Total of cationic resins | 0.72 | 0.62 | 0.72 | 0.66 | 0.75 | 0.62 | 0.74 | 0.62 | 0.69 |
| | Silane coupling agent | Silane coupling agent #1 (amount in terms of SiO₂) | 0.09 | 0.1 | 0.06 | 0.09 | 0.09 | 0.09 | 0.09 | 0.09 | 0.09 |
| | | Silane coupling agent #2 (amount in terms of SiO₂) | 0.03 | 0.05 | 0.02 | 0.08 | 0.03 | 0.03 | 0.03 | 0.03 | 0.03 |
| | | Total of silane coupling agents | 0.12 | 0.15 | 0.08 | 0.17 | 0.12 | 0.12 | 0.12 | 0.12 | 0.12 |
| | Phosphorus compound (amount in terms of P) | | 0.040 | 0.060 | 0.040 | 0.040 | 0.020 | 0.070 | 0.040 | 0.050 | 0.040 |
| | Cobalt compound (amount in terms of Co) | | 0.0050 | 0.0080 | 0.0120 | 0.0080 | 0.0120 | 0.0050 | 0.0018 | 0.0180 | 0.0080 |
| | Titanium compound (amount in terms of Ti) | | | | | | | | | | 0.01 |
| | Vanadium compound (amount in terms of V) | | | | | | | | | | 0.003 |

**[Table 6]**

| Treatment agent No. | | | No. 10 | No. 11 | No. 12 | No. 13 | No. 14 | No. 15 | No. 16 |
|---|---|---|---|---|---|---|---|---|---|
| Composition (mass ratio with respect to solid content) | Cationic resin | Cationic urethane resin | 0.15 | 0.15 | 0.15 | 0.15 | 0.15 | 0.15 | 0.15 |
| | | Cationic phenol resin | 0.02 | 0.02 | 0.02 | 0.02 | 0.02 | 0.03 | 0.02 |
| | | Cationic resin acrylic resin | 0.4 | 0.53 | 0.45 | 0.57 | 0.48 | 0.51 | 0.48 |
| | | Total of cationic resin | 0.57 | 0.70 | 0.62 | 0.74 | 0.65 | 0.69 | 0.65 |
| | Silane coupling agent | Silane coupling agent #1 (amount in terms of SiO₂) | 0.09 | 0.06 | 0.15 | 0.09 | 0.06 | 0.09 | 0.09 |
| | | Silane coupling agent #2 (amount in terms of SiO₂) | 0.06 | | 0.06 | 0.08 | 0.03 | 0.03 | 0.03 |
| | | Total of silane coupling agents | 0.15 | 0.06 | 0.21 | 0.17 | 0.09 | 0.12 | 0.12 |
| | Phosphorus compound (amount in terms of P) | | 0.070 | 0.060 | 0.040 | 0.010 | 0.080 | 0.060 | 0.040 |
| | Cobalt compound (amount in terms of Co) | | 0.0100 | 0.0100 | 0.0100 | 0.0100 | 0.0030 | 0.0013 | 0.0220 |
| | Titanium compound (amount in terms of Ti) | | | | | | | | |
| | Vanadium compound (amount in terms of V) | | | | | | | | |

**[Table 7]**

| Treatment agent No. | | | No. 17 | No. 18 | No. 19 | No. 20 | No. 21 | No. 22 | No. 23 | No. 24 | No. 25 | No. 26 | No. 27 | No. 28 | No. 29 |
|---|---|---|---|---|---|---|---|---|---|---|---|---|---|---|---|
| Compos | Resin | Cationic urethane | | | | | | | | | | | | 0.15 | 0.15 |
| ition (mass ratio with respect to solid content) | | resin | | | | | | | | | | | | | |
| | | Cationic phenol resin | | | | | | | | | | | | 0.09 | 0.03 |
| | | Cationic acrylic resin | | | | | | | | | | | | 0.4 | 0.45 |
| | | Anionic urethane resin | | | | | 0.20 | | | 0.02 | | | 0.12 | | |
| | | Nonionic urethane resin | | 0.15 | | 0.20 | | 0.32 | | 0.15 | 0.21 | | 0.16 | | |
| | | Nonionic epoxy resin | 0.12 | | 0.01 | | | 0.10 | 0.15 | | | 0.10 | | | |
| | | Nonionic phenol resin | 0.12 | 0.08 | 0.12 | | 0.08 | | | | | 0.12 | | | |
| | | Anionic acrylic resin | 0.52 | 0.38 | 0.55 | 0.45 | 0.45 | 0.35 | 0.48 | 0.46 | *0.55* | 0.45 | 0.38 | | |
| | | Total of resins | 0.76 | 0.61 | 0.68 | 0.65 | 0.73 | 0.77 | 0.63 | 0.63 | 0.76 | 0.67 | 0.66 | 0.64 | 0.63 |
| | Silane coupling agent | Silane coupling agent #1 (amount in terms of SiO₂) | 0.08 | 0.08 | 0.08 | 0.09 | 0.08 | 0.05 | 0.06 | 0.03 | 0.06 | 0.09 | 0.06 | 0.08 | 0.05 |
| | | Silane coupling agent #2 | 0.07 | 0.04 | | 0.09 | 0.02 | 0.03 | 0.06 | 0.12 | 0.05 | 0.09 | 0.03 | 0.04 | 0.04 |
| | | (amount in terms of SiO₂) | | | | | | | | | | | | | |
| | | Total of silane coupling agents | 0.15 | 0.12 | 0.08 | 0.18 | 0.10 | 0.08 | 0.12 | 0.15 | 0.11 | 0.18 | 0.09 | 0.12 | 0.09 |
| | Phosphorus compound (amount in terms of P) | | 0.050 | 0.050 | 0.060 | 0.060 | 0.012 | 0.074 | 0.050 | 0.015 | 0.050 | 0.060 | 0.013 | 0.015 | 0.032 |
| | Cobalt compound (amount in terms of Co) | | 0.008 0 | 0.010 0 | 0.010 0 | 0.010 0 | 0.018 0 | 0.005 0 | 0.003 0 | 0.019 0 | 0.012 0 | 0.003 0 | 0.019 0 | 0.002 0 | 0.018 0 |
| | Titanium compound (amount in terms of Ti) | | | | | | | | | | 0.01 | | | | |
| | Vanadium compound (amount in terms of V) | | | | | | | | | | 0.005 | | | | |

**[Table 8]**

| Treatment agent No. | | | No. 30 | No. 31 | No. 32 | No. 33 | No. 34 | No. 35 | No. 36 | No. 37 | No. 38 |
|---|---|---|---|---|---|---|---|---|---|---|---|
| Compositi on (mass ratio with respect to solid | Resin | Cationic urethane resin | | | | | | | | | 0.15 |
| | | Cationic phenol resin | | | | | | | | | 0.02 |
| | | Cationic acrylic resin | | | | | | | | | 0.52 |
| | | Anionic urethane resin | | | 0.12 | | 0.15 | | | | |
| | | Nonionic urethane resin | 0.10 | | | 0.18 | | 0.23 | 0.15 | | |
| content) | | Nonionic epoxy resin | | 0.20 | | | 0.10 | 0.10 | | 0.12 | |
| | | Nonionic phenol resin | 0.23 | 0.12 | 0.15 | 0.13 | | | 0.13 | 0.15 | |
| | | Anionic acrylic resin | 0.25 | 0.32 | 0.38 | 0.42 | 0.46 | 0.35 | 0.41 | 0.35 | |
| | | Total of resins | 0.58 | 0.64 | 0.65 | 0.73 | 0.71 | 0.68 | 0.69 | 0.62 | 0.69 |
| | Silane coupling agent | Silane coupling agent #1 (amount in terms of SiO₂) | 0.08 | 0.06 | 0.12 | 0.05 | 0.06 | 0.09 | 0.12 | 0.03 | 0.04 |
| | | Silane coupling agent #2 (amount in terms of SiO₂) | 0.08 | | 0.08 | 0.06 | 0.07 | 0.06 | 0.02 | 0.12 | 0.04 |
| | | Total of silane coupling agents | 0.16 | 0.06 | 0.20 | 0.11 | 0.13 | 0.15 | 0.14 | 0.15 | 0.08 |
| | Phosphorus compound (amount in terms of P) | | 0.065 | 0.055 | 0.043 | 0.010 | 0.077 | 0.051 | 0.021 | 0.050 | 0.039 |
| | Cobalt compound (amount in terms of Co) | | 0.0090 | 0.0120 | 0.0150 | 0.0090 | 0.0080 | 0.0010 | 0.0220 | 0.0000 | 0.0000 |
| | Titanium compound (amount in terms of Ti) | | | | | | | | | | |
| | Vanadium compound (amount in terms of V) | | | | | | | | | | |

### 4. Production of Coated Plated Steel Sheet

The plated layer in the plated steel sheet was dipped in an alkaline degreasing liquid (FC-4336L (manufactured by Nihon Parkerizing Co., Ltd.) having a pH of 12, at a bath temperature of 55°C for 60 seconds, and then washed with pure water and dried by application of warm air.

The aqueous surface treatment agent was applied on the plated layer in the plated steel sheet by a bar coater, and then heated in a hot air drying furnace under heating conditions shown in Table 9 to Table 21, thereby preparing a protective layer with an amount of attachment shown in Table 9 to Table 21.

In an example of "Yes" noted in the column of the item "Co treatment" in Table 21, the following dipping treatment was carried out on the plated layer in the plated steel sheet before production of the protective layer.

### -Dipping Treatment-

Cobalt sulfate heptahydrate was dissolved at a concentration of 2.5 g/L, to prepare an aqueous cobalt sulfate solution in which the pH was adjusted to 2.4. Next, the plated steel sheet was dipped in the aqueous cobalt sulfate for 4 seconds, and then washed with water and dried by hot air.

### 6. Various Kinds of Measurement of Coated Plated Steel Sheet

### 6-1. Mass Ratio of Each Atom in Protective Layer with respect to Total Mass of Protective Layer

The mass ratio of each atom in the protective layer with respect to the total mass of the protective layer corresponds to the mass ratio of each atom with respect to the solid content in the treatment agent.

The method of measuring the mass ratio of each atom in the protective layer from the coated plated steel sheet is as follows.

The coated plated steel sheet is processed by a CRYO-FIB (Focused Ion Beam)-µ sampling method with a focused ion beam apparatus, thereby obtaining a specimen in which a cross section along with the thickness direction of the protective layer is defined as a measurement surface. The focused ion beam apparatus used here is "NB5000" manufactured by Hitachi High-Technologies Corporation.

A width of 15 µm along with a surface of the coated plated steel sheet is set as an observation range and the measurement surface of the specimen is observed with a scanning transmission type electron microscope (STEM).

Elemental analysis with an energy dispersive X-ray spectrometer (EDS) is carried out in a rectangular range of 100 nm short side × 500 nm long side, which is a shape in which one-half of the thickness of the protective layer is defined as the center and a short side is along with the plate thickness direction of the coated plated steel sheet, in the observation range, and each atomic concentration is calculated. This operation is carried out at any five positions separate from one another by 300 µm or more in a direction along with a surface of the coated plated steel sheet, and thus the arithmetic average with respect to each atomic concentration (% by atom) is determined.

The analysis elements did not include oxygen, but included not only C, Si, P, and Co, but also any element contained at a concentration of 0.1% by atom or more in elemental analysis with EDS.

Conversion by mass from the arithmetic average of the C concentration (% by atom) is performed, and the mass of C with respect to the analysis elements is defined as the ratio of the mass of the resin (A1) in the protective layer with respect to the total mass of the protective layer.

Conversion by mass in terms of SiO₂ from the arithmetic average value of the Si concentration (% by atom) is performed, and the mass of C with respect to the analysis elements is defined as the ratio of the mass of a silicon atom in terms of SiO₂ in the protective layer with respect to the total mass of the protective layer.

Conversion by mass from the arithmetic average of the P concentration (% by atom) or the Co concentration (% by atom) is performed, and each mass ratio of P or Co with respect to the analysis elements is defined as the ratio of the mass of a phosphorus atom or a cobalt atom in the protective layer with respect to the total mass of the protective layer.

Herein, observation conditions with a scanning transmission type electron microscope (STEM), and elemental analysis conditions with an energy dispersive X-ray spectrometer (EDS) are as follows.

### -Observation Conditions with Scanning Transmission Type Electron Microscope (STEM)-

Apparatus: "spherical aberration correction transmission electron microscope (Cs- TEM): NEOARM" manufactured by JEOL Ltd.
Magnification: 100000x
   · Accelerating voltage: 200 keV
   · Other conditions: STEM observation carried out with cryo-holder at -160°C.

### -Elemental analysis conditions with energy dispersive X-ray spectrometer (EDS)-

### Apparatus: "JED-2300T" manufactured by JEOL Ltd.

- Accelerating voltage: 200 keV
- Other conditions: analysis carried out with cryo-holder at -160°C.

### 6-2. Ratio of Co/Si in Protective Layer

The ratio of Co/Si in the protective layer, "the atomic concentration ratio of the atomic concentration of cobalt and the atomic concentration of silicon", corresponds to the mass ratio of a cobalt atom and the mass ratio of a silicon atom with respect to the solid content in the treatment agent.

Herein, the method of measuring the mass ratio of each atom in the protective layer, from the coated plated steel sheet, is to determine the mass ratio of a cobalt atom and the mass ratio of a silicon atom and calculate the ratio of Co/Si in the protective layer, in the same manner as in the mass ratio of each atom in the protective layer with respect to the total mass of the protective layer.

### 6-3. Co Concentrating Factor in Protective Layer on MgZn₂ Phase

The Co concentrating factor of the protective layer on the MgZn₂ phase, "the atomic concentration ratio of the atomic concentration of cobalt and the atomic concentration of silicon (Atomic concentration of cobalt/Atomic concentration of silicon) at a position of a depth of 10 nm from the interface between the plated layer and the protective layer was the atomic concentration ratio of the atomic concentration of cobalt and the atomic concentration of silicon (Atomic concentration of cobalt/Atomic concentration of silicon) at a position of a depth of 60 nm from the interface between the plated layer and the protective layer, in a region of the protective layer, in which the region was in contact with the MgZn₂ phase included in the plated layer" was measured as follows.

The coated plated steel sheet is processed by a CRYO-FIB (Focused Ion Beam)-µ sampling method with a focused ion beam apparatus, thereby obtaining a specimen in which a cross section along with the thickness direction of the protective layer is defined as a measurement surface. The focused ion beam apparatus used here was "NB5000" manufactured by Hitachi High-Technologies Corporation.

A width of 15 µm along with a surface of the coated plated steel sheet was set as an observation range and the measurement surface of the specimen was observed with a scanning transmission type electron microscope (STEM).

The phase in the plated layer, in contact with the protective layer, was identified to specify the MgZn₂ phase by elemental analysis with an energy dispersive X-ray spectrometer (EDS) and diffraction analysis in the observation range.

Elemental analysis with an energy dispersive X-ray spectrometer (EDS) was carried out in a rectangular range of 10 nm short side × 50 nm long side, in which a long side was in contact with the interface between the protective layer and the MgZn₂ phase, and thus the atomic concentration A of a cobalt atom and the atomic concentration A of a Si atom were calculated. The atomic concentration ratio A of the atomic concentration A of a cobalt atom and the atomic concentration A of a Si atom was calculated from the atomic concentration A of a cobalt atom and the atomic concentration A of a Si atom.

Elemental analysis with an energy dispersive X-ray spectrometer (EDS) was carried out in a rectangular range of 10 nm short side × 50 nm long side, which is a shape in which a position apart from the interface between the MgZn₂ phase and the protective layer, by 60 nm, in the plate thickness direction to the coated plated steel sheet was defined as the center and a short side was along with the plate thickness direction of the coated plated steel sheet, and thus the atomic concentration B of a cobalt atom and the atomic concentration B of a Si atom were calculated. The atomic concentration ratio B of the atomic concentration B of a cobalt atom and the atomic concentration B of a Si atom was calculated from the atomic concentration B of a cobalt atom and the atomic concentration B of a Si atom.

This operation was carried out for ten positions in total including two positions of each of any five specimens that were separate from one another by 300 nm or more in a direction along with a surface of the coated plated steel sheet, and thus the arithmetic average value of the atomic concentration ratio A and the atomic concentration ratio B was determined.

The Co concentrating factor of the protective layer on the MgZn₂ phase was determined from the resulting arithmetic average value.

Herein, observation conditions with a scanning transmission type electron microscope (STEM), and elemental analysis conditions with an energy dispersive X-ray spectrometer (EDS) are respectively the same conditions as those in measurement of the mass ratio of each atom in the protective layer.

### 6-4. Proportion (% by mol) of Metal Cobalt Present at Interface between Plated Layer and Protective Layer

The proportion of the metal cobalt present at the interface between the plated layer and the protective layer was determined by performing X-ray absorption fine structure (XAFS) analysis (hereinafter, XAFS analysis) to provide an XAFS spectrum and performing fitting treatment of the XAFS spectrum. Specifically, the determination was made as follows.

A specimen having a size of 15 mm × 15 mm and including the plated layer was cut out and collected from the coated plated steel sheet.

The plated layer of the specimen collected was subjected to XAFS analysis, and thus an XAFS spectrum was obtained. Measurement conditions of XAFS analysis were as follows.
· Measurement method: fluorescence method
· Measurement absorption end: K absorption end of Co
· Measurement atmosphere: in the air
· Measurement temperature: room temperature
· Detector: I: 7-device SDD (transmission method: ionization chamber), I₀: ionization chamber
· Energy range: 7700 eV to 7780 eV (step: 0.2 eV)

In this regard, a pellet-shaped Co standard specimen described below was subjected to XAFS analysis, thereby obtaining an XAFS spectrum. Herein, the measurement method, among measurement conditions of XAFS analysis, was changed from the fluorescence method to the transmission method, and thus the analysis was carried out.

### -Standard specimen of Co-

· Co: manufactured by Kojundo Chemical Lab. Co., Ltd.
· CoO: manufactured by Kojundo Chemical Lab. Co., Ltd.
· Co₃O₄: manufactured by Kojundo Chemical Lab. Co., Ltd.
· CoO(OH): manufactured by Kojundo Chemical Lab. Co., Ltd.
· Co(OH): manufactured by Kojundo Chemical Lab. Co., Ltd.
· CoCO₃: manufactured by Kojundo Chemical Lab. Co., Ltd.

The resulting XAFS spectrum is subjected to linear combination fitting analysis (Linier Combination Fitting: LCF analysis) of spectra of respective Co standard specimens, with Athena (analysis software), thereby performing identification of a compound. The XAFS spectrum obtained from the specimen was subjected to linear combination fitting of spectra of respective Co standard specimens, thereby quantitatively determining the chemical state of cobalt and determining the proportion (% by mol) of metal cobalt.

This operation was carried out for five such specimens, and the proportion (% by mol) of metal cobalt was arithmetically averaged.

### 6-5. Amount (mg/m²) of Presence of Cobalt Present at Interface between Plated Layer and Protective Layer

The amount of presence of the cobalt present at the interface between the plated layer and the protective layer was measured as follows.

The amount of cobalt present at the interface between the plated layer and the protective layer was measured with RF-inductively coupled plasma mass spectrometry (ICP-MS). Specifically, a sample having a size of 50 mm × 50 mm was cut out from the plated steel sheet covered with the protective layer, and an edge surface and a rear surface were sealed by refinish paint, thereby preparing a sample for cobalt measurement. The plated layer on a surface of the sample was dissolved in an acidic solution, thereby performing peeling together with a protective coating film. After the solution used for peeling was made to a constant volume of 100 mL, the absolute amount of cobalt contained in the solution was measured by ICP mass spectrometry (ICP analysis apparatus used: AGILENT 8900 model manufactured by Agilent Technologies).

**[Table 9]**

| | | | Example | | | | | | | | | Comparative Example | | | | | | |
|---|---|---|---|---|---|---|---|---|---|---|---|---|---|---|---|---|---|---|
| Constitut ion of coated plated steel sheet | Plated steel sheet | | No. 1 | No. 1 | No. 1 | No. 1 | No. 1 | No. 1 | No. 1 | No. 1 | No. 1 | No. 1 | No. 1 | No. 1 | No. 1 | No. 1 | No. 1 | No. 1 |
| | Aqueous surface treatment agent | | No. 1 | No. 2 | No. 3 | No. 4 | No. 5 | No. 6 | No. 7 | No. 8 | No. 9 | No. 10 | No. 11 | No. 12 | No. 13 | No. 14 | No. 15 | No. 16 |
| | Heating conditi ons | Maximum achieving plate temperature (°C) | 90 | 90 | 90 | 90 | 90 | 90 | 90 | 90 | 90 | 90 | 90 | 90 | 90 | 90 | 90 | 90 |
| | | Heating time (sec) | 5 | 5 | 5 | 5 | 5 | 5 | 5 | 5 | 5 | 5 | 5 | 5 | 5 | 5 | 5 | 5 |
| | | Treatment liquid retention time (sec) | 2 | 2 | 2 | 2 | 2 | 2 | 2 | 2 | 2 | 2 | 2 | 2 | 2 | 2 | 2 | 2 |
| | Amount (mg/m²) of attachment of protective layer | | 2 | 2 | 2 | 2 | 2 | 2 | 2 | 2 | 2 | 2 | 2 | 2 | 2 | 2 | 2 | 2 |
| | Ratio of Co/Si in protective layer | | 0.16 | 0.18 | 0.31 | 0.17 | 0.24 | 0.16 | 0.07 | 0.31 | 0.20 | 0.20 | 0.34 | 0.17 | 0.18 | 0.15 | 0.03 | 0.36 |
| | Co concentrating factor in protective layer on MgZn₂ phase | | 1.12 | 1.02 | 0.92 | 0.89 | 0.82 | 1.02 | 0.96 | 0.78 | 1.03 | 0.79 | 1.01 | 0.74 | 0.77 | 0.71 | 0.66 | 1.04 |
| Evaluatio | Blackening resistance (40°C | | 5 | 5 | 5 | 5 | 5 | 4 | 4 | 5 | 5 | 4 | 4 | 4 | 5 | 5 | 2 | 5 |
| n | 95%RH) | | | | | | | | | | | | | | | | | |
| | Blackening resistance (20°C 60%RH) | | 5 | 4 | 5 | 4 | 5 | 5 | 5 | 5 | 5 | 3 | 5 | 3 | 5 | 4 | 4 | 4 |
| | Weather resistance | | 4 | 3 | 4 | 4 | 4 | 4 | 4 | 4 | 4 | 2 | 3 | 2 | 4 | 4 | 3 | 4 |
| | Corrosion resistance (SST) | | 4 | 3 | 3 | 3 | 3 | 4 | 5 | 3 | 5 | 3 | 2 | 4 | 3 | 4 | 4 | 2 |
| | Adhesiveness | | 5 | 4 | 3 | 5 | 4 | 3 | 5 | 3 | 4 | 5 | 1 | 4 | 2 | 2 | 5 | 2 |

**[Table 10]**

| | | | Example | | | Comparative Example | | Example | |
|---|---|---|---|---|---|---|---|---|---|
| Constitution of coated plated steel sheet | Plated steel sheet | | No. 1 | No. 2 | No. 3 | No. 4 | No. 5 | No. 7 | No. 28 |
| | Aqueous surface treatment agent | | No. 1 | No. 1 | No. 1 | No. 1 | No. 1 | No. 1 | No. 1 |
| | Heating conditions | Maximum achieving plate temperature (°C) | 90 | 90 | 90 | 90 | 90 | 90 | 90 |
| | | Heating time | 5 | 5 | 5 | 5 | 5 | 5 | 5 |
| | | Treatment liquid retention time (sec) | 2 | 2 | 2 | 2 | 2 | 2 | 2 |
| | Amount (mg/m²) of attachment of protective layer | | 2 | 2 | 2 | 2 | 2 | 2 | 2 |
| | Ratio of Co/Si in protective layer | | 0.16 | 0.12 | 0.21 | 0.15 | 0.16 | 0.17 | 0.15 |
| | Co concentrating factor in protective layer on MgZn₂ phase | | 1.11 | 0.98 | 0.99 | 1.00 | 1.10 | 0.88 | 0.85 |
| Evaluation | Blackening resistance (40°C 95%RH) | | 5 | 4 | 5 | 4 | 5 | 5 | 5 |
| | Blackening resistance (20°C 60%RH) | | 5 | 4 | 5 | 3 | 5 | 4 | 5 |
| | Weather resistance | | 4 | 4 | 4 | 2 | 3 | 3 | 4 |
| | Corrosion resistance (SST) | | 4 | 4 | 5 | 3 | 4 | 4 | 4 |
| | Adhesiveness | | 5 | 5 | 3 | 4 | 2 | 5 | 4 |

**[Table 11]**

| | | | Example | | | | | | | | Comparative Example | | | | | | |
|---|---|---|---|---|---|---|---|---|---|---|---|---|---|---|---|---|---|
| Constituti on of coated plated steel sheet | Plated steel sheet | | No. 2 | No. 2 | No. 2 | No. 2 | No. 2 | No. 2 | No. 2 | No. 2 | No. 2 | No. 2 | No. 2 | No. 2 | No. 2 | No. 2 | No. 2 |
| | Aqueous surface treatment agent | | No. 2 | No. 3 | No. 4 | No. 5 | No. 6 | No. 7 | No. 8 | No. 9 | No. 10 | No. 11 | No. 12 | No. 13 | No. 14 | No. 15 | No. 16 |
| | Heating conditio | Maximum achieving plate temperature | 90 | 90 | 90 | 90 | 90 | 90 | 90 | 90 | 90 | 90 | 90 | 90 | 90 | 90 | 90 |
| | ns | (°C) | | | | | | | | | | | | | | | |
| | | Heating time | 5 | 5 | 5 | 5 | 5 | 5 | 5 | 5 | 5 | 5 | 5 | 5 | 5 | 5 | 5 |
| | | Treatment liquid retention time (sec) | 2 | 2 | 2 | 2 | 2 | 2 | 2 | 2 | 2 | 2 | 2 | 2 | 2 | 2 | 2 |
| | Amount (mg/m²) of attachment of protective layer | | 2 | 2 | 2 | 2 | 2 | 2 | 2 | 2 | 2 | 2 | 2 | 2 | 2 | 2 | 2 |
| | Ratio of Co/Si in protective layer | | 0.19 | 0.30 | 0.16 | 0.25 | 0.17 | 0.06 | 0.32 | 0.21 | 0.19 | 0.32 | 0.15 | 0.16 | 0.16 | 0.05 | 0.36 |
| | Co concentrating factor in protective layer on MgZn₂ phase | | 0.98 | 1.02 | 1.10 | 0.89 | 0.92 | 0.93 | 0.92 | 0.88 | 1.10 | 1.05 | 1.06 | 1.05 | 0.98 | 0.99 | 1.03 |
| Evaluatio n | Blackening resistance (40°C 95%RH) | | 4 | 4 | 5 | 4 | 4 | 4 | 5 | 5 | 3 | 4 | 5 | 5 | 5 | 2 | 5 |
| | Blackening resistance (20°C 60%RH) | | 4 | 4 | 4 | 4 | 4 | 4 | 4 | 5 | 3 | 4 | 3 | 5 | 3 | 4 | 5 |
| | Weather resistance | | 3 | 3 | 3 | 3 | 3 | 3 | 3 | 3 | 2 | 3 | 2 | 4 | 3 | 3 | 4 |
| | Corrosion resistance (SST) | | 3 | 3 | 3 | 3 | 4 | 5 | 3 | 4 | 3 | 2 | 3 | 2 | 4 | 4 | 2 |
| | Adhesiveness | | 4 | 4 | 5 | 4 | 4 | 5 | 4 | 4 | 5 | 2 | 5 | 2 | 2 | 5 | 2 |

**[Table 12]**

| | | | Example | | | | | | | | Comparative Example | | | | | | |
|---|---|---|---|---|---|---|---|---|---|---|---|---|---|---|---|---|---|
| Constituti on of coated plated steel sheet | Plated steel sheet | | No. 3 | No. 3 | No. 3 | No. 3 | No. 3 | No. 3 | No. 3 | No. 3 | No. 3 | No. 3 | No. 3 | No. 3 | No. 3 | No. 3 | No. 3 |
| | Aqueous surface treatment agent | | No. 2 | No. 3 | No. 4 | No. 5 | No. 6 | No. 7 | No. 8 | No. 9 | No. 10 | No. 11 | No. 12 | No. 13 | No. 14 | No. 15 | No. 16 |
| | Heating conditio ns | Maximum achieving plate temperature (°C) | 90 | 90 | 90 | 90 | 90 | 90 | 90 | 90 | 90 | 90 | 90 | 90 | 90 | 90 | 90 |
| | | Heating time | 5 | 5 | 5 | 5 | 5 | 5 | 5 | 5 | 5 | 5 | 5 | 5 | 5 | 5 | 5 |
| | | Treatment liquid retention time (sec) | 2 | 2 | 2 | 2 | 2 | 2 | 2 | 2 | 2 | 2 | 2 | 2 | 2 | 2 | 2 |
| | Amount (mg/m²) of attachment of protective layer | | 2 | 2 | 2 | 2 | 2 | 2 | 2 | 2 | 2 | 2 | 2 | 2 | 2 | 2 | 2 |
| | Ratio of Co/Si in protective layer | | 0.21 | 0.22 | 0.19 | 0.24 | 0.16 | 0.08 | 0.32 | 0.21 | 0.22 | 0.36 | 0.19 | 0.18 | 0.18 | 0.04 | 0.36 |
| | Co concentrating factor in protective layer on MgZn₂ phase | | 0.96 | 1.02 | 1.05 | 0.85 | 0.92 | 0.99 | 1.02 | 1.04 | 0.97 | 1.10 | 1.04 | 1.06 | 0.89 | 0.84 | 0.87 |
| Evaluatio n | Blackening resistance (40°C 95%RH) | | 5 | 5 | 5 | 5 | 4 | 4 | 5 | 5 | 5 | 3 | 3 | 4 | 4 | 2 | 4 |
| | Blackening resistance (20°C | | 4 | 5 | 4 | 5 | 5 | 5 | 5 | 5 | 3 | 5 | 3 | 5 | 4 | 4 | 4 |
| | 60%RH) | | | | | | | | | | | | | | | | |
| | Weather resistance | | 3 | 4 | 4 | 4 | 4 | 4 | 4 | 4 | 2 | 3 | 2 | 3 | 3 | 3 | 2 |
| | Corrosion resistance (SST) | | 3 | 3 | 3 | 3 | 4 | 5 | 3 | 5 | 3 | 2 | 4 | 3 | 3 | 3 | 2 |
| | Adhesiveness | | 4 | 3 | 4 | 3 | 3 | 4 | 3 | 3 | 3 | 1 | 4 | 1 | 1 | 4 | 1 |

**[Table 13]**

| | | | Comparative Example | | | | | | | | | | | | | | |
|---|---|---|---|---|---|---|---|---|---|---|---|---|---|---|---|---|---|
| Constituti on of coated plated steel sheet | Plated steel sheet | | No. 4 | No. 4 | No. 4 | No. 4 | No. 4 | No. 4 | No. 4 | No. 4 | No. 4 | No. 4 | No. 4 | No. 4 | No. 4 | No. 4 | No. 4 |
| | Aqueous surface treatment agent | | No. 2 | No. 3 | No. 4 | No. 5 | No. 6 | No. 7 | No. 8 | No. 9 | No. 10 | No. 11 | No. 12 | No. 13 | No. 14 | No. 15 | No. 16 |
| | Heating conditio ns | Maximum achieving plate temperature (°C) | 90 | 90 | 90 | 90 | 90 | 90 | 90 | 90 | 90 | 90 | 90 | 90 | 90 | 90 | 90 |
| | | Heating time | 5 | 5 | 5 | 5 | 5 | 5 | 5 | 5 | 5 | 5 | 5 | 5 | 5 | 5 | 5 |
| | | Treatment liquid retention time (sec) | 2 | 2 | 2 | 2 | 2 | 2 | 2 | 2 | 2 | 2 | 2 | 2 | 2 | 2 | 2 |
| | Amount (mg/m²) of attachment of protective layer | | 2 | 2 | 2 | 2 | 2 | 2 | 2 | 2 | 2 | 2 | 2 | 2 | 2 | 2 | 2 |
| | Ratio of Co/Si in protective layer | | 0.1 5 | 0.2 9 | 0.1 6 | 0.2 2 | 0.1 6 | 0.0 6 | 0.3 1 | 0.2 0 | 0.21 | 0.34 | 0.19 | 0.17 | 0.14 | 0.02 | 0.35 |
| | Co concentrating factor in protective layer on MgZn₂ phase | | 0.7 9 | 1.0 1 | 0.7 8 | 0.7 9 | 0.8 2 | 0.7 6 | 1.0 4 | 1.0 2 | 0.89 | 0.92 | 1.12 | 1.03 | 0.96 | 0.87 | 1.12 |
| Evaluatio n | Blackening resistance (40°C 95%RH) | | 3 | 3 | 3 | 3 | 3 | 2 | 4 | 3 | 3 | 3 | 3 | 3 | 3 | 1 | 4 |
| | Blackening resistance (20°C 60%RH) | | 3 | 3 | 3 | 3 | 3 | 3 | 3 | 3 | 3 | 3 | 3 | 3 | 3 | 3 | 3 |
| | Weather resistance | | 2 | 2 | 2 | 2 | 2 | 2 | 2 | 2 | 2 | 2 | 2 | 2 | 2 | 2 | 2 |
| | Corrosion resistance (SST) | | 3 | 3 | 3 | 3 | 4 | 5 | 3 | 4 | 3 | 2 | 3 | 2 | 4 | 4 | 2 |
| | Adhesiveness | | 5 | 4 | 5 | 4 | 5 | 5 | 4 | 4 | 5 | 3 | 5 | 3 | 3 | 5 | 3 |

**[Table 14]**

| | | | Comparative Example | | | | | | | | | | | | | | |
|---|---|---|---|---|---|---|---|---|---|---|---|---|---|---|---|---|---|
| Constituti on of coated plated steel sheet | Plated steel sheet | | No. 5 | No. 5 | No. 5 | No. 5 | No. 5 | No. 5 | No. 5 | No. 5 | No. 5 | No. 5 | No. 5 | No. 5 | No. 5 | No. 5 | No. 5 |
| | Aqueous surface treatment agent | | No. 2 | No. 3 | No. 4 | No. 5 | No. 6 | No. 7 | No. 8 | No. 9 | No. 10 | No. 11 | No. 12 | No. 13 | No. 14 | No. 15 | No. 16 |
| | Heating | Maximum achieving | 90 | 90 | 90 | 90 | 90 | 90 | 90 | 90 | 90 | 90 | 90 | 90 | 90 | 90 | 90 |
| | conditio ns | plate temperature (°C) | | | | | | | | | | | | | | | |
| | | Heating time | 5 | 5 | 5 | 5 | 5 | 5 | 5 | 5 | 5 | 5 | 5 | 5 | 5 | 5 | 5 |
| | | Treatment liquid retention time (sec) | 2 | 2 | 2 | 2 | 2 | 2 | 2 | 2 | 2 | 2 | 2 | 2 | 2 | 2 | 2 |
| | Amount (mg/m²) of attachment of protective layer | | 2 | 2 | 2 | 2 | 2 | 2 | 2 | 2 | 2 | 2 | 2 | 2 | 2 | 2 | 2 |
| | Ratio of Co/Si in protective layer | | 0.2 1 | 0.3 4 | 0.1 9 | 0.2 6 | 0.1 7 | 0.0 6 | 0.3 1 | 0.2 1 | 0.22 | 0.34 | 0.16 | 0.19 | 0.18 | 0.05 | 0.34 |
| | Co concentrating factor in protective layer on MgZn₂ phase | | 1.0 2 | 0.9 2 | 0.8 9 | 0.8 2 | 1.0 2 | 0.9 9 | 0.7 8 | 1.0 3 | 0.81 | 1.01 | 0.86 | 0.79 | 0.99 | 1.04 | 1.02 |
| Evaluatio n | Blackening resistance (40°C 95%RH) | | 5 | 5 | 5 | 5 | 4 | 4 | 5 | 5 | 5 | 3 | 3 | 4 | 4 | 2 | 4 |
| | Blackening resistance (20°C 60%RH) | | 4 | 5 | 4 | 5 | 5 | 5 | 5 | 5 | 4 | 5 | 4 | 5 | 4 | 4 | 4 |
| | Weather resistance | | 3 | 4 | 4 | 4 | 4 | 4 | 4 | 4 | 3 | 3 | 3 | 3 | 3 | 3 | 3 |
| | Corrosion resistance (SST) | | 3 | 3 | 3 | 3 | 4 | 5 | 3 | 5 | 3 | 2 | 4 | 3 | 3 | 3 | 2 |
| | Adhesiveness | | 2 | 2 | 2 | 2 | 1 | 2 | 1 | 2 | 2 | 1 | 2 | 1 | 1 | 2 | 1 |

**[Table 15]**

| Coated plated steel sheet | | | Inventive Example | | | | | | | | | | | | | | | |
|---|---|---|---|---|---|---|---|---|---|---|---|---|---|---|---|---|---|---|
| Constitut ion of coated plated steel sheet | Plated steel sheet | | No. 31 | No. 32 | No. 33 | No. 34 | No. 35 | No. 36 | No. 35 | No. 36 | No. 36 | No. 31 | No. 32 | No. 31 | No. 32 | No. 35 | No. 31 | No. 36 |
| | Aqueous surface treatment agent | | No. 1 | No. 2 | No. 3 | No. 4 | No. 5 | No. 6 | No. 7 | No. 8 | No. 9 | No. 28 | No. 29 | No. 1 | No. 2 | No. 7 | No. 28 | No. 8 |
| | Heating conditio ns | Maximum achieving plate temperature (°C) | 90 | 90 | 90 | 90 | 90 | 90 | 90 | 90 | 90 | 90 | 90 | 90 | 90 | 90 | 90 | 90 |
| | | Heating time | 5 | 5 | 5 | 5 | 5 | 5 | 5 | 5 | 5 | 5 | 5 | 5 | 5 | 5 | 5 | 5 |
| | | Treatment liquid retention time (s) | 2 | 2 | 2 | 2 | 2 | 2 | 2 | 2 | 2 | 2 | 2 | 4 | 4 | 4 | 5 | 4 |
| | Amount (mg/m²) of attachment of protective layer | | 2 | 2 | 2 | 2 | 2 | 2 | 2 | 2 | 2 | 2 | 2 | 2 | 2 | 2 | 2 | 2 |
| | Ratio of Co/Si in protective layer | | 0.1 6 | 0.1 8 | 0.3 1 | 0.1 7 | 0.2 4 | 0.1 6 | 0.0 6 | 0.3 1 | 0.20 | 0.01 | 0.39 | 0.1 6 | 0.1 8 | 0.0 7 | 0.02 | 0.3 1 |
| | Co concentrating factor in protective layer on MgZn₂ phase | | 0.9 1 | 0.9 9 | 1.0 5 | 0.9 5 | 1.0 2 | 0.9 1 | 0.7 8 | 1.1 0 | 1.08 | 0.75 | 1.11 | 1.8 3 | 1.9 8 | 1.4 8 | 1.80 | 2.4 0 |
| Evaluatio n | Blackening resistance (40°C 95%RH) | | 5 | 4 | 4 | 4 | 4 | 4 | 4 | 5 | 4 | 4 | 4 | 5 | 5 | 5 | 5 | 5 |
| | Blackening resistance (20°C 60%RH) | | 4 | 4 | 4 | 4 | 4 | 4 | 4 | 4 | 4 | 4 | 4 | 5 | 5 | 5 | 5 | 5 |
| | Weather resistance | | 3 | 3 | 3 | 3 | 3 | 3 | 3 | 3 | 3 | 3 | 3 | 4 | 4 | 4 | 4 | 4 |
| | Corrosion resistance (SST) | | 3 | 3 | 3 | 3 | 3 | 3 | 4 | 4 | 3 | 3 | 3 | 5 | 5 | 5 | 5 | 5 |
| | Adhesiveness | | 3 | 3 | 3 | 3 | 3 | 3 | 3 | 3 | 3 | 3 | 3 | 4 | 4 | 4 | 4 | 4 |

**[Table 16]**

| Coated plated steel sheet | | | Comparative Example | | | | | | | | |
|---|---|---|---|---|---|---|---|---|---|---|---|
| Constitution of coated plated steel sheet | Plated steel sheet | | No. 37 | No. 31 | No. 32 | No. 33 | No. 34 | No. 35 | No. 36 | No. 36 | No. 32 |
| | Aqueous surface treatment agent | | No. 1 | No. 10 | No. 11 | No. 12 | No. 13 | No. 14 | No. 15 | No. 16 | No.38 |
| | Heating conditions | Maximum achieving plate temperature (°C) | 90 | 90 | 90 | 90 | 90 | 90 | 90 | 90 | 90 |
| | | Heating time | 5 | 5 | 5 | 5 | 5 | 5 | 5 | 5 | 5 |
| | | Treatment liquid retention time (s) | 2 | 2 | 2 | 2 | 2 | 2 | 2 | 2 | 2 |
| | Amount (mg/m²) of attachment of protective layer | | 2 | 2 | 2 | 2 | 2 | 2 | 2 | 2 | 2 |
| | Ratio of Co/Si in protective layer | | 0.16 | 0.20 | 0.34 | 0.17 | 0.18 | 0.15 | 0.03 | 0.36 | 0.00 |
| | Co concentrating factor in protective layer on MgZn₂ phase | | 0.91 | 1.08 | 0.99 | 0.95 | 1.03 | 0.86 | 0.71 | 1.12 | - |
| Evaluation | Blackening resistance (40°C 95%RH) | | 3 | 4 | 3 | 4 | 4 | 3 | 1 | 4 | 1 |
| | Blackening resistance (20°C 60%RH) | | 2 | 3 | 3 | 3 | 4 | 4 | 2 | 4 | 1 |
| | Weather resistance | | 1 | 2 | 2 | 2 | 3 | 3 | 2 | 3 | 2 |
| | Corrosion resistance (SST) | | 3 | 3 | 2 | 3 | 2 | 3 | 4 | 1 | 3 |
| | Adhesiveness | | 3 | 3 | 3 | 3 | 2 | 3 | 3 | 3 | 3 |

**[Table 17]**

| Coated plated steel sheet | | | Inventive Example | | | | | | | | | | | | | | |
|---|---|---|---|---|---|---|---|---|---|---|---|---|---|---|---|---|---|
| Constituti on of coated plated steel sheet | Plated steel sheet | | No. 31 | No. 32 | No. 33 | No. 34 | No. 35 | No. 36 | No. 35 | No. 36 | No. 36 | No. 31 | No. 32 | No. 31 | No. 35 | No. 36 | No. 35 |
| | Aqueous surface treatment agent | | No. 17 | No. 18 | No. 19 | No. 20 | No. 21 | No. 22 | No. 23 | No. 24 | No. 25 | No. 26 | No. 27 | No. 17 | No. 21 | No. 22 | No. 23 |
| | Heating conditio ns | Maximum achieving plate temperature (°C) | 90 | 90 | 90 | 90 | 90 | 90 | 90 | 90 | 90 | 90 | 90 | 90 | 90 | 90 | 90 |
| | | Heating time | 5 | 5 | 5 | 5 | 5 | 5 | 5 | 5 | 5 | 5 | 5 | 5 | 5 | 5 | 5 |
| | | Treatment liquid retention time (s) | 2 | 2 | 2 | 2 | 2 | 2 | 2 | 2 | 2 | 2 | 2 | 4 | 4 | 4 | 4 |
| | Amount (mg/m²) of attachment of protective coating film | | 2 | 2 | 2 | 2 | 2 | 2 | 2 | 2 | 2 | 2 | 2 | 2 | 2 | 2 | 2 |
| | Ratio of Co/Si in protective layer | | 0.18 | 0.22 | 0.28 | 0.18 | 0.36 | 0.19 | 0.03 | 0.28 | 0.26 | 0.03 | 0.40 | 0.18 | 0.36 | 0.19 | 0.05 |
| | Co concentrating factor in protective layer on MgZn₂ phase | | 0.99 | 1.02 | 1.10 | 1.01 | 0.98 | 1.05 | 0.80 | 1.12 | 1.11 | 0.75 | 1.03 | 1.98 | 2.35 | 2.11 | 1.61 |
| Evaluatio n | Blackening resistance (40°C 95%RH) | | 5 | 4 | 4 | 4 | 4 | 4 | 4 | 5 | 4 | 4 | 5 | 5 | 5 | 5 | 5 |
| | Blackening resistance (20°C 60%RH) | | 4 | 4 | 4 | 5 | 4 | 4 | 4 | 4 | 4 | 4 | 4 | 5 | 5 | 5 | 5 |
| | Weather resistance | | 4 | 3 | 3 | 3 | 3 | 3 | 3 | 4 | 3 | 3 | 3 | 4 | 4 | 4 | 4 |
| | Corrosion resistance (SST) | | 3 | 3 | 3 | 4 | 3 | 5 | 4 | 3 | 5 | 4 | 3 | 4 | 4 | 5 | 5 |
| | Adhesiveness | | 3 | 3 | 3 | 3 | 3 | 4 | 4 | 3 | 3 | 3 | 3 | 4 | 3 | 4 | 3 |

**[Table 18]**

| Coated plated steel sheet | | | Comparative Example | | | | | | | | |
|---|---|---|---|---|---|---|---|---|---|---|---|
| Constitution of coated plated steel sheet | Plated steel sheet | | No. 37 | No. 31 | No. 32 | No. 33 | No. 34 | No. 35 | No. 36 | No. 36 | No. 32 |
| | Aqueous surface treatment agent | | No. 17 | No. 30 | No. 31 | No. 32 | No. 33 | No. 34 | No. 35 | No. 36 | No. 37 |
| | Heating conditions | Maximum achieving plate temperature (°C) | 90 | 90 | 90 | 90 | 90 | 90 | 90 | 90 | 90 |
| | | Heating time | 5 | 5 | 5 | 5 | 5 | 5 | 5 | 5 | 5 |
| | | Treatment liquid retention time (s) | 2 | 2 | 2 | 2 | 2 | 2 | 2 | 2 | 2 |
| | Amount (mg/m²) of attachment of protective layer | | 2 | 2 | 2 | 2 | 2 | 2 | 2 | 2 | 2 |
| | Ratio of Co/Si in protective layer | | 0.18 | 0.18 | 0.39 | 0.21 | 0.22 | 0.19 | 0.02 | 0.32 | 0.00 |
| | Co concentrating factor in protective layer on MgZn₂ phase | | 0.99 | 1.01 | 1.10 | 1.14 | 1.18 | 1.05 | 0.68 | 1.10 | - |
| Evaluation | Blackening resistance (40°C 95%RH) | | 1 | 4 | 4 | 3 | 4 | 4 | 2 | 4 | 2 |
| | Blackening resistance (20°C 60%RH) | | 2 | 3 | 3 | 3 | 3 | 4 | 2 | 5 | 2 |
| | Weather resistance | | 1 | 2 | 2 | 2 | 2 | 3 | 2 | 3 | 2 |
| | Corrosion resistance (SST) | | 3 | 2 | 2 | 4 | 2 | 1 | 3 | 2 | 3 |
| | | Adhesiveness | 3 | 3 | 3 | 3 | 3 | 3 | 3 | 3 | 3 |

**[Table 19]**

| Coated plated steel sheet | | | Inventive Example | | | | | | | | | | | | | | |
|---|---|---|---|---|---|---|---|---|---|---|---|---|---|---|---|---|---|
| Constituti on of coated plated steel sheet | Plated steel sheet | | No. 6 | No. 8 | No. 9 | No. 11 | No. 12 | No. 13 | No. 14 | No. 17 | No. 18 | No. 19 | No. 22 | No. 6 | No. 17 | No. 18 | No. 19 |
| | Aqueous surface treatment agent | | No. 17 | No. 18 | No. 19 | No. 20 | No. 21 | No. 22 | No. 23 | No. 24 | No. 25 | No. 26 | No. 27 | No. 17 | No. 24 | No. 25 | No. 26 |
| | Heating conditio ns | Maximum achieving plate temperature (°C) | 90 | 90 | 90 | 90 | 90 | 90 | 90 | 90 | 90 | 90 | 90 | 90 | 90 | 90 | 90 |
| | | Heating time | 5 | 5 | 5 | 5 | 5 | 5 | 5 | 5 | 5 | 5 | 5 | 5 | 5 | 5 | 5 |
| | | Treatment liquid retention time (s) | 2 | 2 | 2 | 2 | 2 | 2 | 2 | 2 | 2 | 2 | 2 | 4 | 4 | 4 | 4 |
| | Amount (mg/m²) of attachment of protective layer | | 2 | 2 | 2 | 2 | 2 | 2 | 2 | 2 | 2 | 2 | 2 | 2 | 2 | 2 | 2 |
| | Ratio of Co/Si in protective layer | | 0.18 | 0.22 | 0.28 | 0.18 | 0.32 | 0.19 | 0.05 | 0.28 | 0.26 | 0.02 | 0.40 | 0.18 | 0.28 | 0.26 | 0.01 |
| | Co concentrating factor in | | 0.99 | 1.19 | 1.00 | 1.01 | 1.00 | 1.05 | 0.80 | 0.99 | 1.02 | 0.75 | 1.12 | 1.98 | 2.10 | 2.30 | 1.50 |
| | protective layer on MgZn₂ phase | | | | | | | | | | | | | | | | |
| Evaluatio n | Blackening resistance (40°C 95%RH) | | 5 | 4 | 4 | 4 | 4 | 4 | 4 | 5 | 4 | 4 | 5 | 5 | 5 | 5 | 5 |
| | Blackening resistance (20°C 60%RH) | | 5 | 4 | 4 | 5 | 4 | 4 | 4 | 4 | 4 | 4 | 4 | 5 | 5 | 5 | 5 |
| | Weather resistance | | 4 | 3 | 3 | 3 | 3 | 3 | 3 | 3 | 3 | 3 | 4 | 4 | 4 | 4 | 4 |
| | Corrosion resistance (SST) | | 3 | 3 | 3 | 4 | 3 | 4 | 4 | 3 | 5 | 4 | 3 | 5 | 4 | 5 | 5 |
| | Adhesiveness | | 3 | 3 | 3 | 3 | 3 | 4 | 4 | 3 | 3 | 3 | 3 | 4 | 4 | 3 | 3 |

**[Table 20]**

| Coated plated steel sheet | | | Comparative Example | | | | | | | | | Inventive Example | | | |
|---|---|---|---|---|---|---|---|---|---|---|---|---|---|---|---|
| Constitutio n of coated plated steel sheet | Plated steel sheet | | No. 5 | No. 19 | No. 22 | No. 23 | No. 27 | No. 6 | No. 6 | No. 1 | No. 1 | No. 1 | No. 1 | No. 1 | No. 1 |
| | Aqueous surface treatment agent | | No. 17 | No. 30 | No. 31 | No. 32 | No. 33 | No. 34 | No. 35 | No. 36 | No. 37 | No. 2 | No. 4 | No. 5 | No. 7 |
| | Heating condition s | Maximum achieving plate temperature (°C) | 90 | 90 | 90 | 90 | 90 | 90 | 90 | 90 | 90 | 90 | 90 | 90 | 90 |
| | | Heating time | 5 | 5 | 5 | 5 | 5 | 5 | 5 | 5 | 5 | 5 | 5 | 5 | 5 |
| | | Treatment liquid retention time (s) | 2 | 2 | 2 | 2 | 2 | 2 | 2 | 2 | 2 | 4 | 4 | 4 | 4 |
| | Amount (mg/m²) of attachment of protective layer | | 2 | 2 | 2 | 2 | 2 | 2 | 2 | 2 | 2 | 2 | 2 | 2 | 2 |
| | Ratio of Co/Si in protective layer | | 0.18 | 0.18 | 0.39 | 0.21 | 0.22 | 0.19 | 0.02 | 0.32 | 0.00 | 0.18 | 0.17 | 0.24 | 0.08 |
| | Co concentrating factor in protective layer on MgZn₂ phase | | 0.99 | 1.01 | 1.02 | 1.14 | 1.18 | 1.05 | 0.64 | 1.05 | - | 1.98 | 1.90 | 2.40 | 1.55 |
| Evaluation | Blackening resistance (40°C 95%RH) | | 4 | 4 | 4 | 3 | 4 | 4 | 2 | 4 | 2 | 5 | 5 | 5 | 5 |
| | Blackening resistance (20°C 60%RH) | | 5 | 3 | 3 | 3 | 3 | 4 | 3 | 5 | 2 | 5 | 5 | 5 | 5 |
| | Weather resistance | | 3 | 2 | 2 | 2 | 2 | 3 | 2 | 3 | 3 | 4 | 4 | 4 | 4 |
| | Corrosion resistance (SST) | | 3 | 1 | 2 | 4 | 2 | 1 | 3 | 2 | 3 | 3 | 5 | 4 | 5 |
| | Adhesiveness | | 2 | 3 | 3 | 3 | 3 | 3 | 3 | 3 | 3 | 4 | 5 | 3 | 5 |

**[Table 21]**

| Coated plated steel sheet | | | Inventive Example | | | | | | | | | | | | | | | |
|---|---|---|---|---|---|---|---|---|---|---|---|---|---|---|---|---|---|---|
| Constitut ion of coated | Plated steel sheet | | No. 33 | No. 35 | No. 36 | No. 32 | No. 6 | No. 9 | No . 1 | No . 1 | No. 33 | No. 35 | No. 36 | No. 32 | No. 6 | No. 9 | No . 1 | No . 1 |
| | Aqueous surface treatment | | No. | No. | No. | No. | No. | No. | No | No | No. | No. | No. | No. | No. | No. | No | No |
| plated steel sheet | agent | | 6 | 3 | 5 | 24 | 18 | 17 | . 7 | . 2 | 6 | 3 | 5 | 24 | 18 | 17 | .7 | .2 |
| | Heating conditio ns | Maximum achieving plate temperature (°C) | 90 | 90 | 90 | 90 | 90 | 90 | 90 | 90 | 90 | 90 | 90 | 90 | 90 | 90 | 90 | 90 |
| | | Heating time | 5 | 5 | 5 | 5 | 5 | 5 | 5 | 5 | 5 | 5 | 5 | 5 | 5 | 5 | 5 | 5 |
| | | Treatment liquid retention time (s) | 2 | 2 | 2 | 2 | 4 | 2 | 2 | 4 | 2 | 2 | 2 | 2 | 4 | 2 | 2 | 4 |
| | Co treatment | | No | No | No | No | No | No | No | No | Yes | Yes | Yes | Yes | Yes | Yes | Ye s | Ye s |
| | Amount (mg/m²) of attachment of protective layer | | 2 | 2 | 2 | 2 | 2 | 2 | 2 | 2 | 2 | 2 | 2 | 2 | 2 | 2 | 2 | 2 |
| | Ratio of Co/Si in protective layer | | 0.17 | 0.32 | 0.23 | 0.29 | 0.25 | 0.21 | 0.0 8 | 0.1 9 | 0.20 | 0.32 | 0.26 | 0.27 | 0.25 | 0.19 | 0.0 7 | 0.2 3 |
| | Co concentrating factor in protective layer on MgZn₂ phase | | 0.93 | 1.10 | 1.05 | 0.06 | 1.55 | 1.02 | 0.9 8 | 1.9 9 | 0.91 | 1.02 | 1.02 | 1.12 | 1.19 | 0.99 | 1.0 3 | 2.1 0 |
| | Proportion (% by mol) of metal Co present at interface between plated layer and protective layer | | 0 | 0 | 0 | 0 | 0 | 0 | 0 | 0 | 6 | 25 | 19 | 43 | 35 | 30 | 25 | 34 |
| | Amount (mg/m²) of Co present at interface between plated layer and protective layer | | 0 | 0 | 0 | 0 | 0 | 0 | 0 | 0 | 3.5 | 1.9 | 2.4 | 2.2 | 0.9 | 3.2 | 1.3 | 2.5 |
| Evaluatio n | Blackening resistance (40°C 95%RH) | | 4 | 4 | 4 | 4 | 5 | 5 | 5 | 5 | 5 | 5 | 5 | 5 | 5 | 5 | 5 | 5 |
| | Blackening resistance (20°C 60%RH) | | 4 | 4 | 4 | 4 | 5 | 5 | 5 | 5 | 5 | 5 | 5 | 5 | 5 | 5 | 5 | 5 |
| | Weather resistance | | 3 | 3 | 3 | 3 | 3 | 4 | 4 | 4 | 4 | 4 | 4 | 4 | 4 | 4 | 4 | 4 |
| | Corrosion resistance (SST) | | 3 | 3 | 3 | 3 | 3 | 3 | 5 | 3 | 3 | 3 | 3 | 3 | 5 | 3 | 4 | 3 |
| | Adhesiveness | | 3 | 3 | 3 | 3 | 3 | 3 | 5 | 4 | 3 | 3 | 3 | 3 | 3 | 3 | 5 | 4 |

### 6. Evaluation Test

### (1) Blackening Resistance (40°C 95%RH)

Pure water (0.1 cc (100 µl)) was dropped on a surface of the protective layer of the coated plated steel sheet (hereinafter, also referred to as "treated plate"), another protective layer as a treated plate was overlapped on the protective layer, and a weight of 6 kg was placed so that a uniform load was applied on the overlapped treated plate. After the overlapped treated plate was left to stand in a state in which the weight was placed, in a constant temperature and humidity tank at 40°C and a relative humidity of 95% for 120 hours, the state of the change in color of a portion onto which the pure water dropped was visually observed, and was evaluated according to the following evaluation criteria. The evaluation results are shown in Table 9 to Table 21. Herein, a case of 4 or more was determined to be favorable, and a case of 3 or less was determined not to be practical.
5: No change in color
4: Extremely slight change in color observed
3: Slight change in color observed
2: Clear change in color observed
1: Clear blackening or change in color observed, and variation caused.

### (2) Blackening Resistance (20°C 60%RH)

The same test as in "(1) Blackening Resistance (40°C)" above was carried out except that the temperature of the constant temperature and humidity tank was changed to 20°C and the relative humidity was changed to 60%. The state of the change in color of a portion onto which the pure water was dropped was visually observed, and was evaluated according to the following evaluation criteria. The evaluation results are shown in Table 9 to Table 21. Herein, a case of 4 or more was determined to be favorable, and a case of 3 or less was determined not to be practical.
5: No change in color
4: Extremely slight change in color observed
3: Slight change in color observed
2: Clear change in color observed
1: Clear blackening or change in color observed, and variation caused.

### (3) Weather Resistance

An outdoor exposure test of the treated plate for 24 weeks from Autumn (around September) toward Spring (around March) was performed, and the color difference of a surface of the protective layer in the treated plate, before and after the test, was measured with a color difference meter (COLORMETER ZE2000 manufactured by NIPPON DENSHOKU INDUSTRIES Co., Ltd.). The difference in L value and difference in b value before and after the test were determined from the measurement results, and were evaluated according to the following evaluation criteria. The evaluation results are shown in Table 9 to Table 21. Here, a lower score between the difference in L value and the difference in b value is preferentially shown for the evaluation results in Tables 6 to 11. In a case in which the evaluation result was rated as 3 or more, such a case was determined as a practical level.

### Difference in L value

4: from 0 to less than 2.
3: from 2 to less than 4.
2: from 4 to less than 7.
1: 7 or more.

### Difference in b value

4: from 0 to less than 1.
3: from 1 to less than 4.
2: from 4 to less than 7.
1:7 or more.

### (4) Corrosion Resistance (SST)

After neutral salt water spraying was applied to the protective layer of the treated plate for 240 hours based on a salt water spraying test method JIS-Z-2371, the proportion (%) of an area in which white rust occurred, of the treated plate, was visually determined, and was evaluated according to the following evaluation criteria. The evaluation results are shown in Table 9 to Table 21. A case in which the evaluation result is rated as 3 or more corresponds to a practical level.
5: a white rust occurrence area of less than 1%.
4: a white rust occurrence area of from 1% to less than 3%.
3: a white rust occurrence area of from 3% to less than 10%.
2: a white rust occurrence area of from 10% to less than 30%.
1: a white rust occurrence area of 30% or more.

### (5) Adhesiveness

A test plate was dipped in boiling water for 2 hours and left to stand for 24 hours, and thereafter 100 grids of 1-mm square were created thereon by cutting with a cutter. Thereafter, a peeling test with a cellophane tape was performed, and evaluation was made according to the following criteria. The evaluation results are shown in Table 9 to Table 21. A case in which the evaluation result is rated as 3 or more corresponds to a practical level.
5: a number of peeled grids of 0
4: a number of peeled grids of from 1 to less than 10.
3: a number of peeled grids of from 10 to less than 30%.
2: a number of peeled grids of from 30 to less than 70.
1: a number of peeled grids of 70 or more.

### 7. Aspect A

As clear from the above embodiments, the disclosure includes the following aspects A.

A coated plated steel sheet of a first aspect A of the disclosure includes
a steel sheet, a plated layer, and a protective layer stacked in the listed order,
the plated layer contains aluminum, zinc, and magnesium,
an average value of a ratio of an atomic concentration of the aluminum with respect to a total of an atomic concentration of the magnesium and an atomic concentration of the zinc in an outermost layer at a depth of 5 nm in the plated layer is from 0.40 to 1.50,
the protective layer contains a resin (A1), a silicon compound (B1), a phosphorus compound (C1), and a cobalt compound (D1),
a ratio of a mass of the resin (A1) in the protective layer with respect to a total mass of the protective layer is 0.60 or more,
a ratio of a mass of a silicon atom in terms of SiO₂ in the protective layer with respect to the total mass of the protective layer is from 0.07 to 0.19,
a ratio of a mass of a phosphorus atom in the protective layer with respect to the total mass of the protective layer is from 0.011 to 0.075, and
a ratio of a mass of a cobalt atom in the protective layer with respect to the total mass of the protective layer is from 0.0015 to 0.0200.

According to the first aspect A of the disclosure, it is possible to provide a coated plated steel sheet including a plated layer containing aluminum, zinc, and magnesium, and a protective layer, in which blackening resistance can be ensured.

A coated plated steel sheet of a second aspect A of the disclosure is according to the first aspect A, in which the resin (A1) is a cationic resin.

According to the second aspect A of the disclosure, blackening resistance can be more ensured.

A coated plated steel sheet of a third aspect A of the disclosure is according to the first or second aspect A, in which the resin (A1) contains at least one selected from the group consisting of a urethane resin, a phenol resin, and a (meth)acrylic resin.

According to the third aspect A of the disclosure, the protective layer, which is processed, can be inhibited from being cracked.

A coated plated steel sheet of a fourth aspect A of the disclosure is according to any one of the first to third aspects A, in which an atomic concentration ratio (Atomic concentration of cobalt/Atomic concentration of silicon) of an atomic concentration of cobalt and an atomic concentration of silicon in the protective layer is from 0.01 to 0.38.

According to the fourth aspect A of the disclosure, blackening resistance can be more ensured.

A coated plated steel sheet of a fifth aspect A of the disclosure is according to any one of the first to fourth aspects A, in which
the plated layer includes a MgZn₂ phase,
at least one portion of the MgZn₂ phase is in contact with the protective layer, and
an atomic concentration ratio of an atomic concentration of cobalt and an atomic concentration of silicon at a position of a depth of 10 nm from an interface between the plated layer and the protective layer (Atomic concentration of cobalt/Atomic concentration of silicon) is from 1.15 times to 2.50 times an atomic concentration ratio of an atomic concentration of cobalt and an atomic concentration of silicon at a position of a depth of 60 nm from the interface between the plated layer and the protective layer (Atomic concentration of cobalt/Atomic concentration of silicon) in a region of the protective layer, in which the region is in contact with the MgZn₂ phase.

According to the fifth aspect A of the disclosure, blackening resistance can be more ensured.

A coated plated steel sheet of a sixth aspect A of the disclosure is according to any one of the first to fifth aspects A, in which
an average value of the atomic concentration of the aluminum in the outermost layer at a depth of 5 nm in the plated layer is from 20% by atom to 60% by atom,
an average value of the atomic concentration of the magnesium in the outermost layer at a depth of 5 nm in the plated layer is from 10% by atom to 75% by atom, and
an average value of the atomic concentration of the zinc in the outermost layer at a depth of 5 nm in the plated layer is from 1% by atom to 40% by atom.

A coated plated steel sheet of a seventh aspect A of the disclosure is according to any one of the first to fifth aspects A, in which
an average value of the atomic concentration of the aluminum in the outermost layer at a depth of 5 nm in the plated layer is from 20% by atom to 60% by atom,
an average value of the atomic concentration of the magnesium in the outermost layer at a depth of 5 nm in the plated layer is from 30% by atom to 75% by atom, and
an average value of the atomic concentration of the zinc in the outermost layer at a depth of 5 nm in the plated layer is from 1% by atom to 10% by atom.

A coated plated steel sheet of an eighth aspect A of the disclosure is according to any one of the first to fifth aspects A, in which
an average value of the atomic concentration of the aluminum in the outermost layer at a depth of 5 nm in the plated layer is from 25% by atom to 60% by atom,
an average value of the atomic concentration of the magnesium in the outermost layer at a depth of 5 nm in the plated layer is from 10% by atom to 60% by atom, and
an average value of the atomic concentration of the zinc in the outermost layer at a depth of 5 nm in the plated layer is from 5% by atom to 40% by atom.

According to the sixth to eighth aspects A of the disclosure, not only corrosion resistance of the plated layer is maintained with the atomic concentration of the aluminum, but also blackening resistance of the plated layer under a normal environment can be more enhanced. In addition, the plated layer not only can be inhibited from deteriorating in blackening resistance, but also can ensure coating film adhesiveness and corrosion resistance.

According to the sixth to eighth aspects A of the disclosure, not only blackening resistance of the plated layer is ensured with the atomic concentration of the magnesium, but also corrosion resistance and adhesiveness of the plated layer can be more enhanced. In addition, not only deterioration in blackening resistance of the plated layer under a normal environment is suppressed, but also binding between the plated layer and the phosphorus compound (C1) contained in the protective layer is stronger, and therefore corrosion resistance and coating film adhesiveness of the plated layer can be ensured.

According to the sixth to eighth aspects A of the disclosure, corrosion resistance and adhesiveness of the plated layer can be more enhanced with the average value of the atomic concentration of the zinc. In addition, the plated layer not only can be inhibited from deteriorating in blackening resistance, but also can ensure coating film adhesiveness and corrosion resistance. In addition, blackening resistance of the plated layer can be more enhanced.

A coated plated steel sheet of a ninth aspect A of the disclosure is according to any one of the first to eighth aspects A, in which
a proportion of the aluminum in the plated layer is from 5.0% by mass to 65.0% by mass, and
a proportion of the magnesium in the plated layer is from 0.5% by mass to 10.0% by mass.

A coated plated steel sheet of a tenth aspect A of the disclosure is according to any one of the first to eighth aspects A, in which
a proportion of the aluminum in the plated layer is from 45.0% by mass to 65.0% by mass,
a proportion of the magnesium in the plated layer is from 0.5% by mass to 5.0% by mass, and
a proportion of Ca in the plated layer is from 50 ppm by mass to 400 ppm by mass.

A coated plated steel sheet of an eleventh aspect A of the disclosure is according to any one of the first to eighth aspects A, in which
a proportion of the aluminum in the plated layer is from 5.0% by mass to 25.0% by mass, and
a proportion of the magnesium in the plated layer is from 1.5% by mass to 10.0% by mass.

According to the ninth to eleventh aspects A of the disclosure, not only corrosion resistance of the plated layer is maintained with the proportion of the aluminum, but also blackening resistance of the plated layer under a normal environment can be more enhanced. In addition, not only hardening of the plated layer is suppressed, but also adhesiveness and corrosion resistance of the plated layer can be more ensured.

According to the ninth to eleventh aspects A of the disclosure, not only blackening resistance of the plated layer is ensured with the proportion of magnesium, but also corrosion resistance and adhesiveness of the plated layer can be more enhanced. In addition, not only the appearance of the plated layer is improved, but also blackening resistance of the plated layer under a normal environment can be more enhanced.

According to the tenth aspect A of the disclosure, the proportion of Ca contained in the plated layer is adjusted in a specified numerical value range, whereby concentrating of Mg in the outermost layer of the plated layer can be suppressed. As a result, the average value of the ratio of the atomic concentration of the aluminum with respect to the total of the atomic concentration of the magnesium and the atomic concentration of the zinc in the outermost layer at a depth of 5 nm in the plated layer can be adjusted within a specified numerical value range, from 0.40 to 1.50.

A coated plated steel sheet of a twelfth aspect A of the disclosure is according to the eighth or eleventh aspect A, in which 5% by mol or more of a chemical state of cobalt present in the plated layer is metal cobalt.

According to the twelfth aspect A of the disclosure, blackening resistance can be more ensured.

### 8. Aspect B

As clear from the above embodiments, the disclosure further includes the following aspects B.

A coated plated steel sheet of a first aspect B of the disclosure includes a steel sheet, a plated layer, and a protective layer stacked in the listed order. The plated layer contains aluminum, zinc, and magnesium. An average value of a ratio of an atomic concentration of the aluminum with respect to a total of an atomic concentration of the magnesium and an atomic concentration of the zinc in an outermost layer at a depth of 5 nm in the plated layer is from 0.4 to 1.5. The protective layer contains a cationic resin (A1), a silicon compound (B1), a phosphorus compound (C1), and a cobalt compound (D1). A ratio of a mass of the cationic resin (A1) in the protective layer with respect to a total mass of the protective layer is 0.6 or more. A ratio of a mass of a silicon atom in terms of SiO₂ in the protective layer with respect to the total mass of the protective layer is from 0.07 to 0.19. A ratio of a mass of a phosphorus atom in the protective layer with respect to the total mass of the protective layer is from 0.015 to 0.075. A ratio of a mass of a cobalt atom in the protective layer with respect to the total mass of the protective layer is from 0.0015 to 0.020.

According to the first aspect B, it is possible to provide a coated plated steel sheet including a plated layer containing aluminum, zinc, and magnesium, and a protective layer, in which blackening resistance can be ensured.

A coated plated steel sheet of a second aspect B of the disclosure is according to the first aspect B, in which an average value of the atomic concentration of the aluminum in the outermost layer at a depth of 5 nm in the plated layer is from 20% by atom to 60% by atom.

According to the second aspect B, not only corrosion resistance of the plated layer is maintained, but also blackening resistance of the plated layer under a normal environment can be more enhanced. In addition, the plated layer not only can be inhibited from deteriorating in blackening resistance, but also can ensure coating film adhesiveness and corrosion resistance.

A coated plated steel sheet of a third aspect B of the disclosure is according to the first or second aspect B, in which an average value of the atomic concentration of the zinc in the outermost layer at a depth of 5 nm in the plated layer is from 1% by atom to 10% by atom.

According to the third aspect B, corrosion resistance and adhesiveness of the plated layer can be more enhanced. In addition, the plated layer not only can be inhibited from deteriorating in blackening resistance, but also can ensure coating film adhesiveness and corrosion resistance. In addition, blackening resistance of the plated layer can be more enhanced.

A coated plated steel sheet of a fourth aspect B of the disclosure is according to any one of the first to third aspects B, in which an average value of the atomic concentration of the magnesium in the outermost layer at a depth of 5 nm in the plated layer is from 30% by atom to 75% by atom.

According to the fourth aspect B, not only blackening resistance of the plated layer is ensured, but also corrosion resistance and adhesiveness of the plated layer can be more enhanced. In addition, not only deterioration in blackening resistance of the plated layer under a normal environment is suppressed, but also binding between the plated layer and the phosphorus compound (C1) contained in the protective layer is stronger, and therefore corrosion resistance and coating film adhesiveness of the plated layer can be ensured.

A coated plated steel sheet of a fifth aspect B of the disclosure is according to any one of the first to fourth aspects B, in which a proportion of the aluminum in the plated layer is from 45.0% by mass to 65.0% by mass.

According to the fifth aspect B, not only corrosion resistance of the plated layer is maintained, but also blackening resistance of the plated layer under a normal environment can be more enhanced. In addition, not only hardening of the plated layer is suppressed, but also adhesiveness and corrosion resistance of the plated layer can be more ensured.

A coated plated steel sheet of a sixth aspect B of the disclosure is according to any one of the first to fifth aspects B, in which a proportion of the magnesium in the plated layer is from 0.5% by mass to 5.0% by mass.

According to the sixth aspect B, not only blackening resistance of the plated layer is ensured, but also corrosion resistance and adhesiveness of the plated layer can be more enhanced. In addition, not only the appearance of the plated layer is improved, but also blackening resistance of the plated layer under a normal environment can be more enhanced.

A coated plated steel sheet of a seventh aspect B of the disclosure is according to any one of the first to sixth aspects B, in which a proportion of Ca in the plated layer is from 50 ppm by mass to 400 ppm by mass.

According to the seventh aspect B, the proportion of Ca contained in the plated layer is adjusted in a specified numerical value range, whereby concentrating of Mg in the outermost layer of the plated layer can be suppressed. As a result, the average value of the ratio of the atomic concentration of the aluminum with respect to the total of the atomic concentration of the magnesium and the atomic concentration of the zinc in the outermost layer at a depth of 5 nm in the plated layer can be particularly adjusted within a specified numerical value range, from 0.4 to 1.5.

The disclosure of Japanese Patent Application No. 2023-102000 is herein incorporated by reference in its entirety.

All documents, patent applications, and technical standards described herein are herein incorporated by reference, as if each individual document, patent application, and technical standard were specifically and individually indicated to be incorporated by reference.

## Claims

1. A coated plated steel sheet comprising a steel sheet, a plated layer, and a protective layer stacked in the listed order, wherein
the plated layer contains aluminum, zinc, and magnesium,
an average value of a ratio of an atomic concentration of the aluminum with respect to a total of an atomic concentration of the magnesium and an atomic concentration of the zinc in an outermost layer at a depth of 5 nm in the plated layer is from 0.40 to 1.50,
the protective layer contains a resin (A1), a silicon compound (B1), a phosphorus compound (C1), and a cobalt compound (D1),
a ratio of a mass of the resin (A1) in the protective layer with respect to a total mass of the protective layer is 0.60 or more,
a ratio of a mass of a silicon atom in terms of SiO₂ in the protective layer with respect to the total mass of the protective layer is from 0.07 to 0.19,
a ratio of a mass of a phosphorus atom in the protective layer with respect to the total mass of the protective layer is from 0.011 to 0.075, and
a ratio of a mass of a cobalt atom in the protective layer with respect to the total mass of the protective layer is from 0.0015 to 0.0200.

2. The coated plated steel sheet according to claim 1, wherein the resin (A1) is a cationic resin.

3. The coated plated steel sheet according to claim 1, wherein the resin (A1) contains at least one selected from the group consisting of a urethane resin, a phenol resin, and a (meth)acrylic resin.

4. The coated plated steel sheet according to claim 1, wherein an atomic concentration ratio (Atomic concentration of cobalt/Atomic concentration of silicon) of an atomic concentration of cobalt and an atomic concentration of silicon in the protective layer is from 0.01 to 0.38.

5. The coated plated steel sheet according to claim 1, wherein
the plated layer comprises a MgZn₂ phase,
at least one portion of the MgZn₂ phase is in contact with the protective layer, and
an atomic concentration ratio of an atomic concentration of cobalt and an atomic concentration of silicon at a position of a depth of 10 nm from an interface between the plated layer and the protective layer (Atomic concentration of cobalt/Atomic concentration of silicon) is from 1.15 times to 2.50 times an atomic concentration ratio of an atomic concentration of cobalt and an atomic concentration of silicon at a position of a depth of 60 nm from the interface between the plated layer and the protective layer (Atomic concentration of cobalt/Atomic concentration of silicon) in a region of the protective layer, in which the region is in contact with the MgZn₂ phase.

6. The coated plated steel sheet according to claim 1, wherein
an average value of the atomic concentration of the aluminum in the outermost layer at a depth of 5 nm in the plated layer is from 20% by atom to 60% by atom,
an average value of the atomic concentration of the magnesium in the outermost layer at a depth of 5 nm in the plated layer is from 10% by atom to 75% by atom, and
an average value of the atomic concentration of the zinc in the outermost layer at a depth of 5 nm in the plated layer is from 1% by atom to 40% by atom.

7. The coated plated steel sheet according to claim 1, wherein
an average value of the atomic concentration of the aluminum in the outermost layer at a depth of 5 nm in the plated layer is from 20% by atom to 60% by atom,
an average value of the atomic concentration of the magnesium in the outermost layer at a depth of 5 nm in the plated layer is from 30% by atom to 75% by atom, and
an average value of the atomic concentration of the zinc in the outermost layer at a depth of 5 nm in the plated layer is from 1% by atom to 10% by atom.

8. The coated plated steel sheet according to claim 1, wherein
an average value of the atomic concentration of the aluminum in the outermost layer at a depth of 5 nm in the plated layer is from 25% by atom to 60% by atom,
an average value of the atomic concentration of the magnesium in the outermost layer at a depth of 5 nm in the plated layer is from 10% by atom to 60% by atom, and
an average value of the atomic concentration of the zinc in the outermost layer at a depth of 5 nm in the plated layer is from 5% by atom to 40% by atom.

9. The coated plated steel sheet according to claim 1, wherein
a proportion of the aluminum in the plated layer is from 5.0% by mass to 65.0% by mass, and
a proportion of the magnesium in the plated layer is from 0.5% by mass to 10.0% by mass.

10. The coated plated steel sheet according to claim 1, wherein
a proportion of the aluminum in the plated layer is from 45.0% by mass to 65.0% by mass,
a proportion of the magnesium in the plated layer is from 0.5% by mass to 5.0% by mass, and
a proportion of Ca in the plated layer is from 50 ppm by mass to 400 ppm by mass.

11. The coated plated steel sheet according to claim 1, wherein
a proportion of the aluminum in the plated layer is from 5.0% by mass to 25.0% by mass, and
a proportion of the magnesium in the plated layer is from 1.5% by mass to 10.0% by mass.

12. The coated plated steel sheet according to claim 8 or claim 11, wherein 5% by mol or more of a chemical state of cobalt present in an interface between the plated layer and the protective layer is metal cobalt.
